# EUROPÄISCHE PATENTSCHRIFT

(11) **EP 2 435 502 B1**
(45) Veröffentlichungstag und Bekanntmachung des Hinweises auf die Patenterteilung: **19.10.2016**
(21) Anmeldenummer: 10717606.7
(22) Anmeldetag: 26.04.2010
(51) Int. Cl.: C08G 77/46, C08L 101/10, C09J 101/10

(54) **HÄRTBARE SILYLGRUPPEN ENTHALTENDE ZUSAMMENSETZUNGEN UND DEREN VERWENDUNG**
CURABLE SILYL-GROUP CONTAINING COMPOSITIONS AND ITS USE
COMPOSITIONS CONTENANT DES GROUPEMENTS SILYL ET LEUR EMPLOI

(30) Priorität: 25.05.2009 DE 102009022631
(43) Veröffentlichungstag der Anmeldung: 04.04.2012
(73) Patentinhaber: Evonik Degussa GmbH, 45128 Essen (DE)
(72) Erfinder: SCHUBERT, Frank, 47506 Neukirchen-Vluyn (DE); KNOTT, Wilfried, 45355 Essen (DE)
(86) Internationale Anmeldenummer: PCT/EP2010/055502
(87) Internationale Veröffentlichungsnummer: WO 2010/136280

(56) Entgegenhaltungen:
- EP-A1- 1 586 597
- EP-A1- 2 036 938
- EP-A1- 2 093 244

## Beschreibung

Die Erfindung betrifft Silylgruppen tragende Hydroxylverbindungen enthaltende härtbare Zusammensetzungen und deren Verwendung.

Als Silylgruppen tragende Hydroxylverbindungen, die im Sinne dieser Erfindung Verwendung finden, werden als Reaktionsprodukte verstanden, die durch Alkoxylierung von epoxyfunktionellen Silanen an Doppelmetallcyanid-Katalysatoren gemäß dem in der noch nicht vorveröffentlichten Schrift DE 10 2008 000360.3 beschriebenen Verfahren hergestellt werden können. Diese Produkte werden im Weiteren als Silylpolyether 1 bezeichnet. Eine Silylgruppe im Rahmen dieser Erfindung ist durch unterschiedliche oder gleiche organische oder oxyorganische Reste gekennzeichnet.

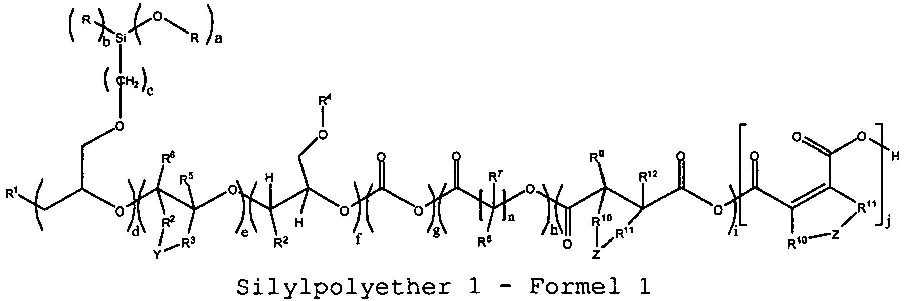

Im Rahmen dieser Erfindung umfasst der Begriff Polyether sowohl Polyether, Polyetherole, Polyetheralkohole, Polyetherester aber auch Polyethercarbonate, die gegebenenfalls synonym zueinander verwendet werden. Dabei ist nicht erforderlich, dass der Ausdruck "Poly" damit einhergehen muss, dass es sich um eine Vielzahl von Etherfunktionalitäten oder Alkoholfunktionalitäten im Molekül oder Polymer handelt. Vielmehr wird dadurch nur angedeutet, dass zumindest Wiederholungseinheiten einzelner Monomerbausteine oder aber Zusammensetzungen vorliegen, die eine höhere Molmasse und zudem auch noch eine gewisse Polydispersität aufweisen.
Das Wortfragment "Poly" umfasst im Zusammenhang mit dieser Erfindung nicht nur ausschließlich Verbindungen mit zumindest 3 Wiederholungseinheiten eines oder mehrerer Monomere im Molekül, sondern insbesondere auch solche Zusammensetzungen von Verbindungen, die eine Molekulargewichtsverteilung aufweisen und dabei ein mittleres Molekulargewicht von mindestens 200 g/mol besitzen. Bei dieser Definition ist dem Umstand Rechnung getragen, dass es auf dem betrachteten Gebiet der Technik üblich ist, solche Verbindungen bereits als Polymere zu bezeichnen, auch wenn sie nicht einer Polymerdefinition analog OECD- oder REACH-Richtlinien zu genügen scheinen.

Auf dem Gebiet der Verklebung oder Beschichtung von Flächengebilden wurden vielfältige Anstrengungen unternommen, zu gesteuert abbindenden Systemen zu gelangen, die in Abhängigkeit vom Anwendungsgebiet ein optimiertes Härte-/Abbindungsverhalten zeigen.
Die Isocyanat-basierten Systeme, die unter Ausbildung von Polyurethanen zur Verklebung/Beschichtung von Flächen genutzt werden, sind wegen der toxikologischen Bedenklichkeit der Isocyanate in Verruf gekommen und müssen teilweise ersetzt werden.

Dazu wurden verschiedene Wege vorgeschlagen. Einerseits wird die Isocyanatgruppe geschützt und nur während der Vernetzung/Polymerisation in situ umgesetzt, indem Allophanat- oder Biuretstrukturen genutzt werden, andererseits werden neuartige Kleb- und Beschichtungsmittel genutzt, die vollkommen frei von Isocyanaten sind oder aber diese zumindest teilweise ersetzen.

Präpolymersysteme, die über reaktive Alkoxysilylgruppen verfügen, sind seit langem bekannt und werden vielfach zur Herstellung von elastischen Dicht- und Klebstoffen im Industrie- und Baubereich verwendet. In Gegenwart von Luftfeuchtigkeit und geeigneten Katalysatoren sind diese alkoxysilanterminierten Präpolymere bereits bei Raumtemperatur in der Lage, unter Abspaltung der Alkoxygruppen und Ausbildung einer Si-O-Si-Bindung miteinander zu kondensieren. Somit lassen sich diese Präpolymere u.a. als einkomponentige Systeme verwenden, welche den Vorteil einer einfachen Handhabung besitzen, da keine zweite Komponente zudosiert und eingemischt werden muss.

Auch sind terminal alkoxysilanfunktionelle Polyurethane, die über eine Silanpolykondensation vernetzen, ebenfalls lange bekannt. Ein Übersichtsartikel zu dieser Thematik findet sich z.B. in "Adhesives Age" 4/1995, Seite 30 ff. (Autoren: Ta-Min Feng, B. A. Waldmann). Derartige Alkoxysilan-terminierte, feuchtigkeitshärtende Einkomponenten-Polyurethane werden in zunehmendem Maße als weichelastische Beschichtungs-, Dichtungs- und Klebemassen im Bauwesen und in der Automobilindustrie verwendet.

Solche alkoxysilanfunktionellen Polyurethane können gemäß US 3,627,722 oder US 3,632,557 hergestellt werden, indem z.B. Polyetherpolyole zunächst mit einem Überschuss Polyisocyanat zu NCO-haltigen Präpolymeren umgesetzt werden, die dann mit einem aminofunktionellen Alkoxysilan weiter umgesetzt werden. Die entstehenden alkoxysilanfunktionellen Präpolymeren enthalten Harnstoff und Urethangruppen in hoher Konzentration, die zu einer hohen Viskosität der Produkte führen.

Allophanate werden in der Technik durch die Umsetzung eines ein- oder mehrwertigen Alkohols mit großen Mengen an überschüssigem aromatischen, aliphatischen und/oder cycloaliphatischen Diisocyanat hergestellt (vgl. GB A 994 890, U S 3 , 7 6 9, 318, EP A 0 000 194 oder EP A 0 712 840). Hier werden ausschließlich Di- oder Polyisocyanate eingesetzt, um wiederum ein isocyanatfunktionelles Bindemittel zu erhalten. Um eine vorzeitige Vernetzung zu unterbinden, ist es notwendig, einen Überschuss an Polyisocyanat zu verwenden, der nach erfolgter Urethanisierung und Allophanatisierung mittels Abdestillation im Vakuum entfernt werden muss. Bei diesem Konzept ist über den Allophanat-Stickstoff eine weitere Isocyanat-Gruppe als funktionelle Gruppe verknüpft. Die Tatsache, dass Polyisocyanate mit Allophanatstrukturen verglichen mit Analogen ohne Allophanatstrukturen relativ niedrigviskos sind, wird in der Literatur vielfältig, beispielsweise in EP A1 0 682 012, beschrieben. Es ist ebenfalls möglich, Allophanate indirekt, aus anderen Isocyanatderivaten als Urethanen und Isocyanaten herzustellen. So beschreibt die EP A 0 825 211 ein Verfahren zum Aufbau von Allophanatstrukturen aus Oxadiazintrionen; ein weiterer Weg ist die Öffnung von Uretdionen (vgl. Proceedings of the International Waterborne, High-Solids, and Powder Coatings Symposium 2001, 28, 405-419 sowie US-A-2003 0153713) zu Allophanat-Strukturen. Beide Wege benötigen allerdings veredelte Rohstoffe als Ausgangsmaterial und führen nur zu einem an Nebenprodukten reichen Allophanatprodukt. Auch werden beim Aufbau der Vorstufen ausschließlich mindestens difunktionelle Polyisocyanate eingesetzt. Auch die Verwendung von Monoisocyanaten wurde schon im Zusammenhang mit der Allophanatchemie offenbart. In den Anmeldungen US 5,663,272 und US 5,567,793 wird Phenylisocyanat verwendet, um nach Umsetzung mit einem polyfunktionellen Alkohol zu einem NCO- und OH-Gruppenfreien Urethan zu gelangen, das anschließend durch Allophanatisierung mit speziellen MDI-Typen zu einem flüssigen MDI-Polyisocyanat modifiziert wird. Bei dieser Vorgehensweise enthält das Produkt vor der Weiterverarbeitung monomeres Diisocyanat.

Die WO 2007/025667 beschreibt weiterhin modifizierte Alkoxysilangruppen aufweisende Polyurethanpräpolymere, die eine deutlich reduzierte Viskosität aufweisen sollen. Nachteilig bei diesen Präpolymeren ist allerdings die relativ geringe Dichte an Funktionalisierung, die zur Vernetzung bereitgestellt wird.

Die Reaktivität der verkappten Isocyanate mit Biuret- oder Allophanatstruktur ist verglichen mit den freien Isocyanaten verständlicherweise deutlich geringer, kann allerdings durch Zugabe geeigneter Katalysatoren anwendungsbedingt optimiert werden.
Demgegenüber besteht ein weiterer Vorteil von alkoxysilanfunktionellen Präpolymeren in der Tatsache, dass bei der Härtung weder Säuren noch Oxime oder Amine freigesetzt werden. Außerdem entsteht anders als bei Kleb- oder Dichtstoffen auf Isocyanatbasis kein gasförmiges CO₂, durch dessen Entstehung nach dem Verkleben von Bauteilen die Klebemasse nachträglich noch expandieren würde. Des Weiteren sind alkoxysilanfunktionelle Präpolymermischungen im Gegensatz zu isocyanatbasierenden Systemen toxikologisch unbedenklich.

Bei einem besonders verbreiteten Typ von alkoxysilanfunktionellen Präpolymeren handelt es sich um alkoxysilanterminierte Präpolymere. Diese können aus unterschiedlichen Bausteinen aufgebaut sein.

Üblicherweise besitzen diese Präpolymere ein organisches Rückgrat, d.h. sie sind beispielsweise aus Polyurethanen, Polyethern, Polyestern, Polyacrylaten, Polyvinylestern, Ethylen-Olefincopolymeren, Styrol-Butadiencopolymeren oder Polyolefinen aufgebaut, beschrieben u.a. in EP 0 372 561, WO 00/37533 oder US 6,207,766. Daneben sind aber auch Systeme weit verbreitet, deren Rückgrat ganz oder zumindest zum Teil aus Organosiloxanen besteht, beschrieben u.a. in WO 96/34030.

Bei einem besonders vorteilhaften Herstellverfahren für alkoxysilanterminierte Präpolymere wird von Polyolen, z.B. von Polyether- oder Polyesterpolyolen, ausgegangen, die in einem ersten Reaktionsschritt mit einem Überschuss eines Di- oder Polyisocyanates umgesetzt werden. Anschließend werden die dabei erhaltenen isocyanatterminierten Präpolymere m i t aminoalkylfunktionellen Alkoxysilanen zu dem gewünschten alkoxysilanterminierten Präpolymer umgesetzt. Alternativ können a lkoxysilanterminierte Präpolymere auch hergestellt werden, indem ein Polyol oder ein OHfunktionktionelles Polyurethan, wie es durch die Reaktion von Polyolen mit einem Unterschuss an Di- oder Polyisocyanaten herstellbar ist, mit einem isocyanatoalkylfunktionellen Alkoxysilan umgesetzt wird. Diese Herstellverfahren sind beispielsweise in EP 1 421 129 oder WO 2005/000931 beschrieben. Auch weitere Herstellverfahren, z.B. die in WO 02/034838 beschriebene Umsetzung von aminofunktionellen Polyolen mit Carbamatoalkyl-alkoxysilanen, sind vorstellbar.
Des Weiteren sind auch alkoxysilanfunktionelle Präpolymere mit einem Poly-(meth-)acrylatrückgrat bekannt. Diese werden typischerweise durch eine Copolymerisation von (Meth-)Acryloxyalkylalkoxysilanen mit anderen (Meth-)Acrylmonomeren und/oder weiteren ungesättigten Monomerbausteinen, wie z.B. Styrol, aufgebaut.

Zudem können alkoxysilanfunktionelle Polymere auch durch nachträgliches Aufpfropfen von ungesättigen Alkoxysilanen, z.B. von Vinyl- oder (Meth-)Acrylsilanen, hergestellt werden.
Neben einem Einsatz als Kleb- und Dichtstoff, als Beschichtungs- und Oberflächenmmodifizierungsmittel ist auch die Verwendung von alkoxysilanfunktionellen Präpolymeren zur Herstellung von silanvernetzenden Hart- und Weichschäumen, insbesondere von isocyanatfreien sprühbaren Montageschäumen bekannt und z.B. in EP-A1-1 098 920 oder EP-A1-1 363 960 beschrieben. Diese Sprühschäume werden typischerweise aus Druckdosen appliziert und dienen vor allem zum Abdichten von Fensterfugen, als Füll- und Befestigungsmaterial für Türzargen oder allgemein zum Verfüllen und Abdichten von Hohlräumen im Bauwerk. Entsprechend dieser Anwendungen zeichnen sich durch eine möglichst niedrige Schaumdichte, d.h. einer möglichst großen Volumenausbeute pro Schaumdose und damit einer möglichst großen Ergiebigkeit aus. Die niedrigen Schaumdichten werden dabei durch eine Zugabe von einer möglichst großen Menge physikalischer Treibmittel (d.h. in der Schaumdose unter Druck verflüssigter Gase, die beim Sprühprozess die Schaumbildung treiben) erreicht.

Die WO 2008/058955 lehrt ein Verfahren zum Verkleben von Oberflächen, bei dem eine schäumbare Mischung, die Präpolymere mit ausschließlich endständigen und isolierten Alkoxysilylgruppen sowie einer basischen Gruppe im Molekül, wie beispielsweise NH₂-, NHR³-, oder N(R³)₂-Gruppe sowie Treibmittel enthält, auf einer der zu verklebenden Oberflächen oder zwischen den zu verklebenden Oberflächen zu einem Schaum verschäumt wird, oder aber der aus der Mischung herstellbare Schaum nach der Verschäumung auf einer der zu verklebenden Oberflächen oder zwischen den zu verklebenden Oberflächen aufgebracht wird, und der Schaum anschließend zwischen den zu verklebenden Oberflächen zerdrückt wird.

Die Lehre der WO 2008/058955 sieht weiterhin vor, den bereits in der Copolymerstruktur vertretenen Trialkoxysilyleinheiten zur Verstärkung des durch sie eingetragenen Effekts weitere freie Silane als zusätzliche Komponenten hinzuzufügen, die mehrere Funktionen übernehmen können. Es wird deren Rolle als Wasserfänger (Verbesserung der Lagerstabilität), als Vernetzer und/oder Reaktivverdünner (Steigerung der Netzwerkdichte und damit Verbesserung der mechanischen Eigenschaften, z.B. der Reißfestigkeit, der ausgehärteten Masse) und nicht zuletzt bevorzugt in Form der Alkoxysilane, deren Rolle als Haftvermittler diskutiert.

Den niedermolekularen Alkoxysilanen der WO 2008/058955 d.h. Alkoxysilanen, die eine basische Gruppe wie NH₂-, NHR³-, oder N(R³)₂-Gruppe besitzen, wird sogar die reine Funktion als Härtungskatalysatoren oder zumindest Härtungscokatalysatoren zugeschrieben.
Nachteilig an der beschriebenen Vorgehensweise ist die geringe Funktionalisierungsdichte des nur in α,ω-Position mit Silylgruppen terminierten Präpolymers. Angesichts des hochmolekularen Aufbaus des angestrebten Polyurethanpolymers nimmt sich die Silylmodifizierung bescheiden, um nicht zu sagen ungenügend aus, um den angestrebten Effekt einer guten und dauerhaften Substrathaftung wirksam zu adressieren. Daher bezieht sich die Lehre der WO 2008/058955 auf die Option, freie Silane der PU-Matrix hinzuzusetzen, um die gewünschten Effekte (Haftvermittlung, Trocknung, Vernetzung u.ä.) hervorzurufen. Sichergestellt ist hiermit keinesfalls der zielgerichtete Einbau von Silylankergruppen an den Stellen des Polymers, die deren positiver Wirkung bedürfen. Insbesondere im Sinne der qualitätssichernden Reproduzierbarkeit lässt das dargestellte Verfahren Mängel erkennen.
Den dargelegten Mangel, der sich aus dieser mit Unsicherheit behafteten Formulierbarkeit der Systemkomponenten ergibt, sucht die Lehre der WO 2007/085605 zu begegnen, indem sie ausführt, dass es der stofflichen Dreierkombination bestehend aus alkoxysilan-terminierten Polymeren, freiem Aminoalkylalkoxysilan und einem freien Acrylato- bzw. Methacrylatogruppen aufweisenden Alkoxysilan bedarf, um nach Copolymerisation der Komponenten eine Haftungsverbesserung auf diversen Untergründen sicherzustellen. D i e dort ausgeführten anwendungstechnischen Beispiele unterstreichen, dass die Copolymerisation der aus den binären Stoffkombinationen bestehenden alkoxysilylterminierten Polymeren mit Aminosilanen bzw. alkoxysilylterminierten Polymeren mit Methacrylsilan das Haftungsprofil verschlechtern. Da sowohl das Aminosilan als auch das Methacrylsilan nicht polymergebunden in der Präpolymermatrix vorliegen, genügt bei der späteren Copolymerisation deren Lokalisation im Polymer mehr oder minder statistischen Gesetzen. Um dennoch eine gewisse räumliche Gleichverteilung bereits im Präpolymer zu gewährleisten, bedarf es der nach der Lehre der WO 2007/085605 bevorzugten Herstellung der reaktiven Polymerabmischungen, indem zunächst eine Mischung aus dem alkoxysilylterminierten Polymer und einem Füllstoff vorbereitet wird und dann das Methacrylsilan, dann das Aminosilan zugemischt wird und schließlich zur Copolymerisation gebracht werden.

Diesen Bedarf nach einem technisch einfachen, sicheren und insbesondere reproduzierbaren Verfahren sucht die Lehre der unter DE 10 2008 043218 eingereichten, jedoch noch nicht offengelegten Anmeldeschrift zu adressieren, indem sie darauf hinweist, dass man die zuvor dargelegten technischen Beschränkungen und Nachteile überwinden kann, indem man als Copolymerkomponente neue Alkoxysilylgruppen tragende Polyetheralkohole einsetzt, die durch Alkoxylierung epoxidfunktioneller Alkoxysilane an Doppelmetallcyanid (DMC)-Katalysatoren zugänglich sind und in der noch nicht offengelegten Schrift DE 10 2008 000360.3 beschrieben werden, die hiermit vollumfänglich als Teil und Gegenstand dieser Offenbarung eingeführt wird.

Die dort beanspruchten neuen Polyetherstrukturen, hier kurz Silylpolyether 1 genannt, die sowohl Alkoxysilanfunktionen innerhalb der Sequenz der Oxyalkyleneinheiten der Polyetherkette als auch neue Alkoxysilanfunktionen in ihren Termini aufweisen können, erlauben es, die Ankergruppendichte in dem angestrebten Präpolymer nach Belieben, d.h., angepasst auf die jeweilige anwendungstechnische Fragestellung einzustellen.

Diese Polyetherstrukturen besitzen eine Molmassenverteilung von M_{w}/Mₙ ≥ 1,5 und unterscheiden sich damit von anderen auf DMC-Katalyse beruhenden Systemen enger Polydispersität.

Die in der DE 10 2008 000360.3 beanspruchten, reaktiven Silylpolyether 1 stellen auf Grund ihrer hydrolyseempfindlichen und zur Vernetzung neigenden Alkoxysilylgruppen härtbare Polymere dar. Deren Vernetzung zu festen duroplastischen Endprodukten erfolgt auf einfache Weise in Gegenwart von Wasser und wahlweise unter Zusatz von Säure oder Base als Beschleuniger, wobei durch Erhöhung der Temperatur während des Härtungsvorgangs die Topfzeit gesteuert werden kann. Somit kann der Polymeraufbau dieser vernetzbaren Polyether je nach und Art des Starters sowie nach Art, Menge und Abfolge der einsetzbaren Epoxidmonomere auf mannigfaltige Weise variiert werden, um auf diesem Weg wichtige anwendungstechnische Produkteigenschaften abhängig vom jeweiligen Verwendungszweck maßzuschneidern. So lässt sich beispielsweise durch eine Variation des Anteils an Alkoxysilan-Einheiten in der Polymerkette die Vernetzungsdichte und damit das mechanische und physikochemische Eigenschaftsprofil der ausgehärteten Polymere in weiten Grenzen beeinflussen. Überraschenderweise sind hier selbst mit beachtlicher Alkoxysilyl-Funktionalisierungsdichte ausgestattete Silylpolyether 1 niedrigviskose, gut handhabbare Flüssigkeiten, so dass auch im Falle angestrebter hochvernetzter, gut haftender Klebeverbindungen keinerlei Einschränkungen im Hinblick auf die Dosierung dieser Komponente zu verzeichnen sind. Diese Beobachtung differenziert die erfindungsgemäße Lehre von der in der WO 2008/058955 dargelegten Vorgehensweise, die auf das Einbringen freier Silanmonomerer als Formulierungsbestandteile in den Endrezepturen abstellt, um zu gewährleisten, dass die notwendige Vernetzungsdichte bei gleichzeitig niedriger Verarbeitungsviskosität erzielt wird. Die im Hinblick auf ihre strukturelle Vielfalt kaum einzugrenzenden Alkoxysilylgruppen aufweisenden Silylpolyether 1 eröffnen dem in der Polymerchemie vertrauten Fachmann durch den Einbau z.B. von Ester-, Carbonat- und aromatischen Strukturelementen bereits eine Gestaltungsfreiheit, die nahezu beliebige anwendungstechnische Bedürfnisse adressiert.

Aufgabe der vorliegenden Erfindung ist die Bereitstellung neuer härtbarer Zusammensetzungen mit einstellbarem Härtungs- als auch Eigenschaftsprofil enthaltend silylgruppenhaltige Monomere.

Überraschend wurde gefunden, dass sich die nach DE 10 2008 000360.3 herstellbaren Alkoxysilylgruppen tragenden Hydroxylverbindungen in idealer und vielfältiger Weise mit herkömmlichen alkoxysilylfunktionellen Präpolymeren systemkompatibel kombinieren lassen.
Die bevorzugt mehrfach-alkoxysilylfunktionellen Silylpolyether 1 eignen sich hervorragend als Komponenten in verschiedenartigsten härtbaren Zusammensetzungen, z.B. in Kombination mit alkoxysilylfunktionellen Präpolymeren wie beispielsweise alkoxysilylterminierten Polyethern, Polyestern, Polyetherestern, Polyurethanen oder auch in Mischungen mit Alkoxysilylgruppen aufweisenden Polysiloxanen. Als Formulierungskomponente übernehmen sie dank Ihrer überraschend niedrigen Viskosität die Funktion als Reaktivverdünner, vor allem in Kombination mit den typischerweise hochviskosen und hochmolekularen silylterminierten Polyurethanen und Polyethern des Standes der Technik. Sie können in dieser Funktion die bisher üblichen monomeren Reaktivverdünner wie Tetraalkoxysilane oder Alkyltrialkoxysilane ganz oder teilweise substituieren. Gemäß der Erfindung werden die Silypolyether 1 mit weiteren, von Formel 1 verschiedenen Silanverbindungen kombiniert.

Gleichzeitig eröffnen sie die Möglichkeit, den Mangel an Alkoxysilylfunktionalität bisheriger silylterminierter Präpolymerer zu beheben. So ist der Einsatz höher alkoxysilylfunktioneller Silylpolyether 1 in Systemen mit konventionellen Silylpolymeren eine wirksame, reproduzierbare und effiziente Methode, die Vernetzungsdichte und damit die mechanischen Eigenschaften und die Haftung auf diversen Untergründen zu erhöhen. Je nach Mischungsverhältnis und Auswahl der Systemkomponenten lassen sich so auf einfache Weise die Verarbeitungs- und Endeigenschaften gehärteter Silylpolymersysteme gezielt einstellen. Durch eine erfindungsgemäße Kombination der Silylpolyether 1 mit Alkoxysilylgruppen tragenden Polysiloxanen, z.B. den in WO 2007/061847 beschriebenen Verbindungen, lassen sich die für Siloxane typischen Eigenschaften mit denen organischer härtbarer Polymerer vereinigen.

Die auf dem Wege der DMC-Katalyse herstellbaren Silylpolyether 1 lassen sich in Mischungen mit allen silylfunktionellen Verbindungen, die mindestens eine chemisch an ein Polymergerüst gebundene Alkoxysilylgruppe aufweisen, einsetzen. Derartige Silan-modifizierte Polymere sind Silanverbindungen des Typs der Formel (2) 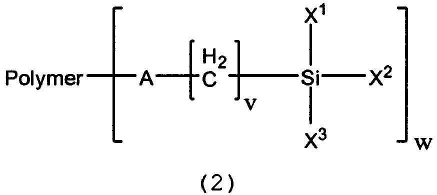 wobei
- X¹, X² und X³: unabhängig voneinander Alkyl- oder Alkoxyreste mit 1-8 C-Atomen sind,
- A: einen Carboxy-, Carbamat-, Amid-, Carbonat-, Ureido- oder Sulfonatgruppe enthaltenden Rest darstellt oder ein Sauerstoffatom bedeutet,
- w: eine ganze Zahl von 1 bis 8 ist und
- v: eine ganze Zahl von 1 bis 20, bevorzugt 1 bis 15 und insbesondere 1 bis 5 ist.

Der Polymerrest ist ausgewählt aus einer Gruppe bestehend aus Alkydharzen, ölmodifizierten Alkydharzen, gesättigten oder ungesättigten Polyestern, natürlichen Ölen, Epoxiden, Polyamiden, Polycarbonaten, Polyethylenen, Polypropylenen, Polybutylenen, Polystyrolen, Ethylen-Propylen-Copolymeren, (Meth)acrylaten, (Meth)acrylamiden und deren Salzen, Phenolharzen, Polyoxymethylen-Homo- und -Copolymeren, Polyurethanen, Polysulfonen, Polysulfidkautschuken, Nitrocellulosen, Vinylbutyraten, Vinylpolymeren, Ethylcellulosen, Celluloseacetaten und/oder -butyraten, Reyon, Schellack, Wachsen, Ethylencopolymeren, organischen Kautschuken, Polysiloxanen, Polyethersiloxanen, Siliconharzen, Polyethern, Polyetherestern und/oder Polyethercarbonaten.

Zu den bevorzugt in Mischungen mit den Silylpolyethern 1 eingesetzten Polymeren der Formel (2) zählen sogenannte α-Silan-terminierte Polymere, deren reaktive Alkoxysilylgruppen nur durch eine Methyleneinheit (v = 1) von einer Stickstoff-haltigen Polymer-gebundenen Gruppe A getrennt ist. Derartige über eine Urethan- bzw. Harnstoffeinheit an ein Polymergerüst gebundene α-SilanPolymere enthalten als Substituenten des Siliziums meist Methoxy- oder Ethoxygruppen. Das Polymergerüst kann dabei beliebig linear oder verzweigt und sowohl organischer als auch siliconischer Natur sein. Besonders bevorzugt sind terminal an die Enden von Polyethern angebundene α-Silane. Von besonderer Bedeutung sind dabei Polyalkylenoxide, speziell Polypropylenglykole (w = 2), mit α-Silanfunktionen an jedem der beiden Kettenden, wie sie unter dem Namen Geniosil^{©} STP-E10 und Geniosil^{©} STP-E30 von der Firma Wacker vertrieben werden. Die Herstellung solcher α-Silan-Präpolymerer wird z.B. in PCT EP 05/003706 und EP-A1-1967550 beschrieben. Besonders geeignet zur Verwendung in Mischungen mit den Silylpolyethern (1) sind z.B. Dimethoxy(methyl)silyl-methylcarbamat- und/oder Trimethoxysilyl-methylcarbamatterminierte Polyether.

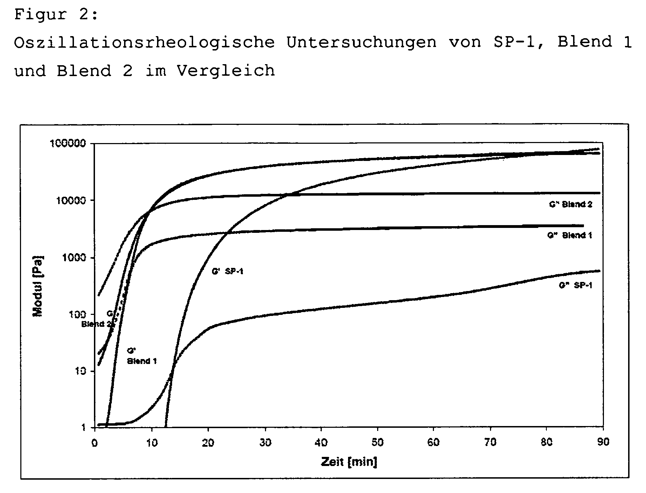

Aus der Literatur ist der stereoelektronisch induzierte α-Effekt, der bei den terminal mit Aminoalkylen-Alkoxysilylsubstituenten ausgestatteten PolyoxyalkylenVerbindungen zum Tragen kommt und intramolekular die hydrolytische Ablösung der Silizium gebundenen Alkoxygruppen fördert, hinlänglich bekannt. Durch Herstellung von Abmischungen, bestehend aus reaktiven, schnell härtenden α-Silanen und den weniger schnell härtenden Silylpolyethern 1 gemäß DE 10 2008 000360.3 ist eine flexible Einstellung der Topfzeit möglich. Der α-Silananteil in der Mischung bewirkt eine rasche Anhärtung und Verkürzung der Klebfreizeit, die höher alkoxysilylfunktionellen Silylpolyether 1 gemäß DE 10 2008 000360.3 ermöglichen eine bessere Durchhärtung und das Erreichen höherer mechanischer Endfestigkeitswerte sowie bei Oberflächenmodifizierungen eine bessere chemische Verankerung auf dem jeweiligen Substrat. Die charakteristischen Eigenschaften und Vorzüge beider Typen von Silylpolymeren lassen sich so ideal kombinieren (vgl. Abb. 2).

Weitere in härtbaren Zusammensetzungen mit Silylpolyether 1 einsetzbare Silanpolymere der Formel (2) sind solche, in denen die Silangruppen terminal über eine Propyleneinheit (v = 3) an ein Polymergerüst gebunden ist und bei denen A eine Urethangruppe darstellt. Bevorzugt sind dabei Polyalkylenoxide, speziell Polypropylenglykole (w = 2), mit Silanfunktionen an jedem der beiden Kettenden, wie sie unter dem Namen Geniosil^{©} STP-E15 und Geniosil^{©} STP-E35 von der Firma Wacker erhältlich sind. Die Herstellung solcher Silan-Polymerer wird z.B. in EP 1824904 beschrieben. Besonders geeignet zur Verwendung in Mischungen mit den Silylpolyethern 1 sind z.B. Dimethoxy(methyl)silyl-propylcarbamat- und/oder Trimethoxysilyl-propylcarbamat-terminierte Polyether.

Ebenso als Mischungsbestandteile geeignete Verbindungen der Formel (2) sind Silan-terminierte Polyurethane, deren Herstellung aus einem Polyol durch Umsetzung mit einem Diisocyanat und anschließend mit einem aminofunktionellen Alkoxysilan z.B. in US 7,365,145, US 3,627,722 oder US 3,632,557 beschrieben wird. Die Bindegruppe A ist dabei ein Urethan- und Harnstoffgruppen tragender Rest. Ein typischer Vertreter dieser Klasse von Silanpolymeren ist z.B. Desmoseal^{©} S XP 2636 von Bayer Material Science. Gehärtete Silan-terminierte Polyurethane sind sehr gut als Bindemittel für elastische Kleb- und Dichtsstoffe sowie Beschichtungen geeignet. Charakteristisch und von Nachteil ist jedoch deren hohe Viskosität, die die Verarbeitbarkeit einschränkt, wie ebenfalls in US 7,365,145 herausgestellt wird. Daher werden Polymere dieses Typs nach Stand der Technik Verdünner zugesetzt. Dies können sowohl reaktive Verdünner, die nicht nur die Viskosität erniedrigen sondern gleichzeitig die Vernetzungsdichte erhöhen, wie monomere Alkoxysilane, als auch nicht reaktive Verdünner sein, welche zusätzlich weichmachende Eigenschaften haben können. Erfindungsgemäße härtbare Mischungen aus Silanterminierten Polyurethanen mit vorzugsweise niedrig viskosen und zumeist höher alkoxysilylfunktionellen Silylpolyethern 1, hergestellt nach dem in DE 10 2008 000360.3 offenbarten Verfahren, vereinen die Produkteigenschaften beider Komponenten. Anstelle konventioneller Verdünner eingesetzt, ermöglichen sie eine flexible Einstellung, vorzugsweise Erhöhung, der Alkoxysilylfunktionalität und damit mechanischer Festigkeit sowie verbesserter Substrathaftung bei gleichzeitiger Absenkung der Viskosität, was zum Beispiel den Spielraum für den Zusatz von Füllstoffen erhöht.

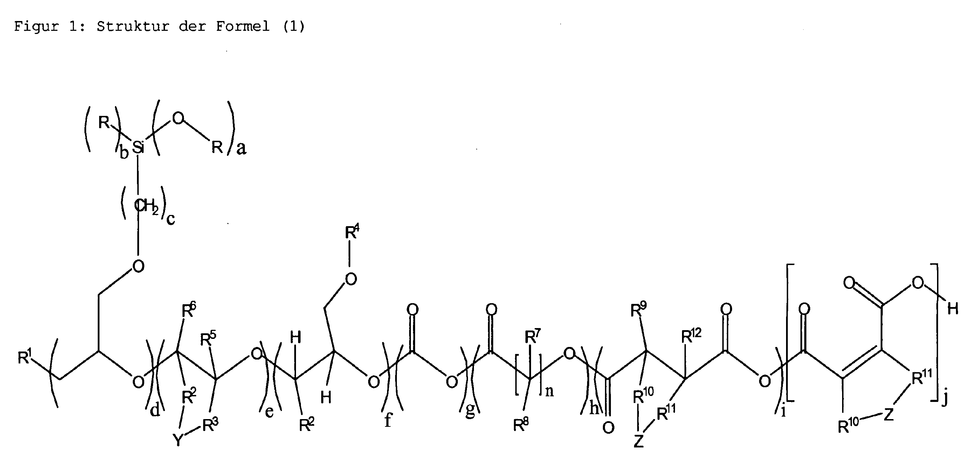

Weitere im Sinne der Erfindung in Systemen mit den Produkten gemäß DE 10 2008 000360.3 verwendbare Silylpolyether 1 sind die seit langem bekannten Urethan- und Harnstoff-freien silylterminierten Polyether der Formel (2) mit A gleich Sauerstoff, in denen also die terminalen Alkoxysilylgruppen über eine Etherfunktion direkt an das Polymergerüst angebunden sind. Derartige Silylpolymere sind in US 3,971,751 beschrieben. Sie bestehen bevorzugt aus einem Polyethergrundgerüst, wobei v in Formel (2) bevorzugt den Wert 3 und w bevorzugt den Wert 2 hat, und sind als MS Polymer^{©}-Produkte von Kaneka erhältlich. Solche härtbaren Silylpolyether eignen sich hervorragend als elastische Dicht- und Klebstoffe, sind aber auf Grund der nur terminal an ein langes Polymergerüst von etwa 10.000 g/mol gebundenen Alkoxysilylgruppen nur zur Ausbildung einer geringen Netzwerkdichte befähigt. Deren Kombination mit niedrigviskosen, bevorzugt mehrfach alkoxysilylfunktionellen Silylpolyethern 1 bietet Zugang zu höhervernetzbaren Systemen, die die Vorzüge beider Klassen von Silylgruppen tragenden Produkten auf sich vereinen: Die Erzielung höherer Härten z.B. im ausgehärteten Film oder in der ausgehärteten Klebverbindung bei gleichzeitig guter Elastizität und Haftung. Die Verwendung von derartigen Mischungen geht einher mit einer oft gewünschten Verkürzung der Klebfreizeit, da sich im Verlaufe der Härtung wegen der höheren Zahl von vernetzbaren Silylgruppen das feste Polymerisat schneller ausbilden kann. Die alleinige Verwendung hoch-silylfunktioneller Polyether 1 führt hingegen tendenziell zu spröderen Produkten. (vgl. Abb. 1)

Auch Alkoxysilylgruppen tragende Polysiloxane wie z.B. in WO 2007/061847 beschrieben, sind mit härtbaren Silylpolyethern gemäß DE 10 2008 000360.3 kombinierbar.

Die durch DMC-Katalyse herstellbaren Silylpolyether 1 lassen sich ebenfalls in Mischungen mit konventionellen monomeren Silanen der Formel (2a)

WₓSiV₍₄₋ₓ₎ (2a)

einsetzen, wobei W gleiche oder verschiedene nicht hydrolysierbare Gruppen, V = gleiche oder verschiedene hydrolysierbare Gruppen oder Hydroxygruppen und x = 1, 2, 3 oder 4 darstellt.

In Formel (2a) können die hydrolysierbaren Gruppen V beispielsweise H, Halogen-, Alkoxy- (bevorzugt Methoxy-, Ethoxy-, i-Propoxy-, n-Propoxy- oder Butoxy-), Aryloxy-(bevorzugt Phenoxy-), Acyloxy- (bevorzugt Acetoxy- oder Propionyloxy-), Acyl- (bevorzugt Acetyl-), Amino-, Monoalkylamino- oder Dialkylamino-Gruppen sein. Der nicht hydrolysierbare Rest W kann beispielsweise ein Alkyl-, Alkenyl-, Alkinyl-, Aryl-, Alkylaryl- oder Aralkyl-Rest sein. Die Alkylkette kann 0 bis 50, vorzugsweise 0 bis 22 Kohlenstoffatome aufweisen und auch durch Heteroatome wie Sauerstoff oder Stickstoff oder Schwefel unterbrochen sein oder auch ein Siliconrest sein. Der aromatische Rest kann auch heteroaromatisch sein. Die Reste W und V können ggf. einen oder mehrere übliche Substituenten, wie beispielsweise Halogen oder Alkoxy aufweisen.

Nicht hydrolysierbare Reste W nach der Formel (2a) mit funktionellen Gruppen können ausgewählt werden aus dem Bereich der Glycidyl- oder Glycidyloxyalkylen-Reste, wie beispielsweise β-Glycidyloxyethyl, γ-Glycidyloxypropyl, δ-Glycidyloxypropyl, ε-Glycidyloxypentyl, ω-Glycidyl-oxyhexyl oder 2-(3,4-Epoxycyclohexyl)ethyl, der Methacryloxyalkylen- und Acryloxyalkylen-Reste, wie beispielsweise Methacryloxymethyl, Acryloxymethyl, Methacryloxyethyl, Acryloxyethyl, Methacryloxypropyl, Acryloxypropyl, Methacryloxybutyl oder Acryloxybutyl, und dem 3-Isocyanatopropyl-Rest.

Solche organofunktionellen monomeren Silane sind zum Beispiel N-Cyclohexylaminomethyltrimethoxysilan, N-Cyclohexyl-3-aminopropyltriethoxysilan, 3-Aminopropyltrimethoxysilan, Vinyltrimethoxysilan, Vinyltriethoxysilan, Vinyldimethoxymethylsilan, 3-Isocyanatopropyltrimethoxysilan, 3-Glycidyloxypropyltrimethoxysilan, 3-Glycidyloxypropyltriethoxysilan, 3-Methacryloxypropyltrimethoxysilan, Methyltrimethoxysilan, Methyltriethoxysilan, Dimethyldimethoxysilan, Phenyltriethoxysilan und/oder Hexadecyltrimethoxysilan allein oder in Mischungen miteinander. Einen Einstieg in diese Thematik bietet "Silylated Surfaces", edited by Donald E. Leyden and Ward T. Collins, Gordon and Breach Science Publishers, Inc., 1980, ISBN 0-677-13370-7.

Es ist generell dem Experten überlassen, die für das erwünschte Eigenschaftsprofil geeigneten Komponenten auszuwählen, um optimiert angepasste Copolymersysteme zu erzeugen. Es steht mithin durch die erfindungsgemäßen Zusammensetzungen ein Baukasten unterschiedlicher Eigenschaftsprofile zur Verfügung, aus dem sich anwendungsgerecht eine optimierte Zusammenstellung auswählen lässt.

Ferner wurde überraschenderweise gefunden, dass sich die unter der Anmeldung DE 10 2008 000360.3 beanspruchten Strukturtypen im Sinne einer Eigenschaftsverbesserung sowohl in der präpolymeren Abmischung als auch im durchgehärteten Polymer auch mit nicht Silylgruppen tragenden vernetzbaren Verbindungen kombinieren lassen. So lassen sich Mischungen der Silylpolyether 1 mit ungesättigten, Doppelbindungen z.B. in Form von Allyl-, Vinyl-, Acrylat- oder Methacrylat-Gruppen aufweisenden Verbindungen nach zwei Mechanismen - hydrolytisch über die Alkoxysilylgruppen und radikalisch oder UV-initiiert über die Doppelbindungen - herstellen und aushärten. Ebenso lassen sich Mischungen der Silylpolyether 1 mit Epoxiden herstellen und in Gegenwart von Feuchtigkeit und Aminen gemeinsam zur Aushärtung bringen.

Neben einstellbaren Topfzeiten, die bei bestimmten Klebe- bzw. Dichtanwendungen gewünscht sind, eröffnen die hier erfindungsgemäß beanspruchten Zusammensetzungen Zugang zu Copolymersystemen mit gegenüber den Einzelkomponenten deutlich verbesserten Eigenschaften. So gewinnen beispielsweise die durch große Elastizitätmoduli aber zugleich mit geringen Stauchhärten gekennzeichneten Polymere, die sich aus der Härtung rein linearer, α,ω-Alkoxysilylgruppen aufweisender Polyoxyalkylenverbindungen ableiten, deutlich an Kompressionsfestigkeit durch die hier erfindungsgemäß beanspruchte Co-Aushärtung mit Alkoxysilylgruppen tragenden Silylpolyethern 1, die auch hydrolytisch härtbare Alkoxysilysubstituenten im Inneren der Polyoxyalkylenkette aufweisen können.

Silylpolyether 1 können ebenfalls in härtbaren Zusammensetzungen mit Alkoxysilylgruppen funktionalisierten Polyethersiloxanen, wie sie in der noch nicht vorveröffentlichten Schrift DE 10 2008 044373.5 beschrieben sind, eingesetzt werden. Vorzugsweise sind diese einsetzbaren Silanverbindungen solche Verbindungen der Formel 1, bei denen R¹ = ein siliciumhaltiger Rest oder ein Siloxanrest ist, der alkyl- und/oder arylgruppensubstituiert sein kann. Derartige ebenfalls auf dem Wege der DMC-katalysierten Alkoxylierung von epoxyfunktionellen Alkoxysilanen darstellbare silylierte Siloxan-Polyether-Copolymere stellen härtbare und gleichzeitig zumeist tensidisch wirksame Verbindungen dar. Ihr Einsatz in Systemen mit Silylpolyethern 1 und evtl. weiteren Silanverbindungen der Formeln (2) oder (2a) gestattet es, z.B. die Benetzung von den zu beschichtenden oder zu verklebenden Untergründen und damit die Hafteigenschaften zu verbessern. Bei geeigneter Auswahl der Silylgruppen tragenden Polyethersiloxane lassen sich weitere Effekte, insbesondere Grenzflächenphänomene, wie das Spreiten der zu härtenden Zusammensetzungen in dünnen Schichten oder die Wirkung als Entlüfter nutzen, um beim Zusammenrühren der Komponenten der härtbaren Mischungen eingerührte Luftblasen zu entfernen.
Die erfindungsgemäßen härtbaren Mischungen eignen sich beispielsweise als Grundstoffe für die Her¬stellung von Klebstoffen, zur Oberflächen¬beschichtung und Oberflächenmodifizierung, als reaktive Vernetzer, als Haftvermittler und Primer sowie Bindemittel oder Dichtstoffe für verschiedene Substrate wie Metalle, Glas und Glasfasern/Glasgewebe, Holz, Holzwerkstoffen, Naturfasern, sowie beispielsweise auch Kork und generell silikatischen Materialien. So erweist sich der gezielte Einbau der sich über hydrolytische Prozesse an Mauerwerk, Beton, Mörtel, usw. verankernden Alkoxysilylgruppierungen als äußert vorteilhaft bei Einsatz derartig ausgerüsteter Systeme im Bereich der Bauwirtschaft, wo es um die verbindende und isolierende Abdichtung von z.B. Zargen für Fenstern und Türen in Rohbauten geht. Auch neuartige Weichmachersysteme sind bei Verwendung ausgewählter Komponenten zugänglich.

Da die neuartigen härtbaren Mischungen bei ihrer Härtung keine gasförmigen Reaktionsprodukte freisetzen, besteht auch die Möglichkeit, sie zur Beschichtung von Oberflächen in Form z.B. eines Lackes oder eines Lackbestandteils zu nutzen. So beschreibt die WO 2008/074489 Beschichtungsmittel mit hoher Kratzbeständigkeit und Witterungsbeständigkeit auf Basis von Polyolen und Polyisocyanaten mit hydrolysierbaren Silangruppen.

Auch ist die Anwendung durch den möglichen Verzicht auf freie Isocyanate auf Anwendungen mit Lebensmittelkontakt ausweitbar. Die erfindungsgemäßen Polymere können als Bindemittel, das heißt zur Verbindung von gleichartigen oder verschiedenartigen Stoffen miteinander, bei der Herstellung von Holzwerkstoffen, wie beispielsweise Spanplatten oder MDF-Platten, der Verklebung der Holz- oder Korkpartikel (auch Holzspänen oder Holzfasern) dienen und stehen so auch für Fußböden, Parkett und Laminatanwendungen als Ersatz zu Aminoplasten oder Isocyanat-Klebezusammensetzungen zur Verfügung. Die Umverteilung der reaktiven Gruppen vom silangruppenmodifizierten Polyisocyanat auf das Polyol unter gleichzeitiger Zurverfügungstellung multipler hydrolysierbarer Alkoxysilylgruppen führt zu neuen Kleb- und Beschichtungsstoffen mit variabel einstellbarem Eigenschaftsprofil. Die erfindungsgemäßen Polymere können auch thermoplastische Eigenschaften besitzen und damit auch zur Herstellung von Formteilen dienen, bei denen ein temperaturabhängiges Fließverhalten notwendig ist. Die Formmassen können in Verfahren wie beispielsweise Spritzgießen, Extrudieren oder Warmpressen verwendet werden. Die erfindungsgemäßen härtbaren Mischungen können auch ohne Katalysatoren eingesetzt werden, so dass eine weitere Vernetzung und Härtung während des Formgebungsprozesses unterbleibt. Nach der Vernetzung gehen die Silylgruppen tragenden Polymere in duroplastische Produkte über.

Wie dem Fachmann bekannt, geschieht die Vernetzung oder Härtung von Alkoxysilylgruppen in einem zweistufigen chemischen Prozess, bei dem in einem ersten Schritt in Gegenwart von Wasser, wobei auch Luftfeuchtigkeit ausreichen kann, die am Silizium gebundenen Alkoxygruppen als korrespondierende Alkohole abgespalten und SiOH-Gruppen ausgebildet werden. Letztere kondensieren im Falle der Selbstkondensation anschließend unter Ausbildung von Si-O-Si-Brücken miteinander und bilden polymere Werkstoffe. Alternativ reagieren die SiOHfunktionellen Intermediate mit reaktive Gruppen aufweisenden Substraten, z.B. besonders gut mit OH-Funktionen tragenden silikatischen Oberflächen, und führen zu einer exzellenten chemischen Verankerung auf dem jeweiligen Untergrund. Die Härtungsgeschwindigkeit lässt sich auf vielfältige Weise durch Zusatz von Katalysatoren oder Temperaturvariation beeinflussen.

Auf dieser Weise können polymere Werkstoffe gegebenenfalls mit schaumartiger Struktur erhalten werden, indem die bekannten Verfahren der freien bzw. katalytisch herbeigeführten Aushärtung von Präpolymersystemen herbeigeführt werden. Durch die Variabilität und Vielzahl der möglichen erfindungsgemäßen Silylpolymermischungen kann anwendungsgerecht die zu wählende Vorzugsform bestimmt werden.

Bevorzugt weisen die in den härtbaren Mischungen enthaltenen Silylpolyether 1 im Mittel mehr als eine Alkoxysilylfunktion pro Hydroxylgruppe auf. Die erfindungsgemäßen härtbaren Mischngen enthalten neben mindestens einer Verbindung der Formel 1 weitere von Formel 1 verschiedene Silanverbindungen,

Die erfindungsgemäß in Mischungen verwendbaren Silylpolyether 1, insbesondere die alkoxysilylmodifizierten Polyetherole der Formel (1), können z.B. durch die Reaktion zwischen silylgruppenmodifizierten Epoxiden und einem Startalkohol unterschiedlichster Provenienz gewonnen werden.

Die Herstellung und die einsetzbaren Epoxid-Strukturtypen sind ausführlich in der nicht vorveröffentlichen DE 10 2008 000360.3 beschrieben. Der Inhalt der Beschreibung und der Ansprüche der DE 10 2008 000360.3 ist hiermit vollumfänglich als Bestandteil dieser Offenbarung anzusehen.
Die so hergestellten Verbindungen gewähren die synthetische Freiheit, zwischen Alkoxysilylgruppen aufweisenden Polyoxyalkylenverbindungen zu wählen, die Alkoxysilylfunktionen sowohl terminal, als auch isoliert, blockartig kumuliert als aber auch statistisch eingestreut in die Polyoxyalkylenkette enthalten.

Die so hergestellten Silylverbindungen, insbesondere die alkoxysilylgruppen modifizierten Silylpolyether 1 der Formel (1), zeichnen sich dadurch aus, dass sie hinsichtlich Strukturaufbau und Molmasse gezielt und reproduzierbar hergestellt werden können. Die Sequenz der Monomereinheiten kann in weiten Grenzen variabel gestaltet werden. Epoxidmonomere können beliebig blockartig aneinander gereiht oder statistisch in die Polymerkette eingebaut sein. Die durch die Reaktion unter Ringöffnung der Reaktionskomponenten in die entstehende Polymerkette eingefügten Fragmente sind in ihrer Sequenz untereinander frei permutierbar, mit der Einschränkung, dass cyclische Anhydride sowie Kohlendioxid statistisch insertiert, also nicht in homologen Blöcken, in der Polyetherstruktur vorliegen.

Werden als Präpolymere solche der Formel (1) eingesetzt und sind am Siliziumatom des Polyethers der Formel (1) weniger als 3 Alkoxygruppen gebunden, werden hochfunktionalisierte Netzwerke gebildet, bei denen Polyetherketten, die jeweils von R¹ gestartet sind und die in ihrer Abfolge die frei permutierbaren Fragmente enthalten, die durch die Reaktion unter Ringöffnung der Reaktionskomponenten in die entstehende Polymerkette eingefügt wurden, über -CH₂-O-(CH₂)_{c}-Si-(CH₂)_{c}-O-CH₂-Brücken miteinander verknüpft sind. Es entstehen also hochkomplexe, hochfunktionalisierte Strukturen. Auch hier lassen sich die Funktionalitäten gezielt auf ein gewünschtes Anwendungsgebiet einstellen. Der Vernetzungsgrad und die Komplexität der erhaltenen Polymerstrukturen steigen mit zunehmender Epoxyfunktionalität der Silylmonomere. Ganz besonders bevorzugt sind 3-Glycidyloxyalkyltrialkoxysilane als Monomere.

Dabei können die Fragmente, die durch die Reaktion unter Ringöffnung in die entstehende Polymerkette eingefügt wurden, im Rahmen der vorhergehenden Definitionen blockartig oder statistisch verteilt, nicht nur in der Kette einer Polyether-Struktureinheit vorkommen, sondern auch statistisch verteilt über die Vielzahl der gebildeten und über -CH₂-O-(CH₂)_{c}-Si-(CH₂)_{c}-O-CH₂-Brücken miteinander verbundenen Polyetherstruktureinheiten, vorkommen. Die Mannigfaltigkeit der Strukturvariationen der Verfahrensprodukte gestattet damit keine absolut eindeutige formelmäßige Beschreibung.

Bevorzugt werden als Silylpolyether 1 Polyetherstrukturen der Formel (1) - siehe auch Figur 1 - eingesetzt. Diese bestehen aus Alkoxysilylgruppen substituierten, linearen Ketten, die durch die Wahl der Fragmente d bis j, entsprechend der durch die Reaktion unter Ringöffnung der Reaktionskomponenten in die Polymerkette eingefügten Fragmente, gezielt hochfunktionalisiert sind und damit für verschiedenartige Anwendungsgebiete zugeschnitten werden können. 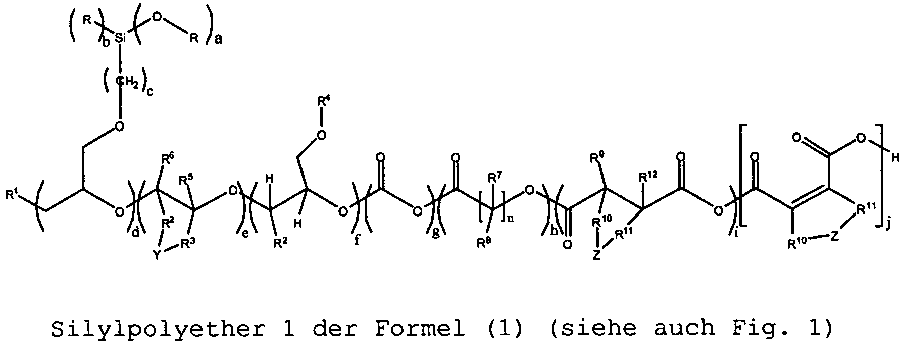 wobei
- a: eine ganze Zahl von 1 bis 3, vorzugsweise 3 ist,
- b: eine ganze Zahl von 0 bis 2, vorzugsweise 0 bis 1, besonders bevorzugt 0 ist, und die Summe von a und b gleich 3 ist,
- c: eine ganze Zahl von 0 bis 22, vorzugsweise von 0 bis 12, besonders bevorzugt von 0 bis 8, ganz besonders bevorzugt von 0 bis 4 und insbesondere gleich 1 oder 3 ist,
- d: eine ganze Zahl von 1 bis 1.000, bevorzugt 1 bis 100, besonders bevorzugt 4 bis 20 und ganz besonders bevorzugt 5 bis 10 und insbesondere größer als 4 oder 10 ist,
- e: eine ganze Zahl von 0 bis 10.000, bevorzugt 1 bis 2000, besonders bevorzugt 1 bis 1000 und insbesondere 1 bis 500 ist,
- f: eine ganze Zahl von 0 bis 1.000, bevorzugt 0 bis 100, besonders bevorzugt 0 bis 50 und insbesondere 0 bis 30 ist,
- g: eine ganze Zahl von 0 bis 1.000, bevorzugt 0 bis 200, besonders bevorzugt 0 bis 100 und insbesondere 0 bis 70 ist,
- h, i und j: ganze Zahlen von 0 bis 500, bevorzugt 0 bis 300, besonders bevorzugt 0 bis 200 und insbesondere 0 bis 100 ist,
- n: eine ganze Zahl zwischen 2 und 8 ist und mit der Maßgabe, dass die Fragmente mit den Indices d bis j untereinander frei permutierbar, d.h. in der Sequenz innerhalb der Polyetherkette gegeneinander austauschbar sind und
- R: einen oder mehrere gleiche oder verschiedene Reste, ausgewählt aus linearen oder verzweigten, gesättigten, einfach oder mehrfach ungesättigten Alkylresten mit 1 bis 20, insbesondere 1 bis 6 Kohlenstoffatomen oder Halogenalkylgruppen mit 1 bis 20 Kohlenstoffatomen darstellt. Bevorzugt entspricht R Methyl-, Ethyl-, Propyl-, Isopropyl-, n-Butyl- und sek.-Butylgruppen; sowie
- R¹: entspricht einem gesättigten oder ungesättigten, gegebenenfalls verzweigten Rest, der vorzugsweise über ein Sauerstoffatom angebunden ist, oder stellt einen Polyetherrest vom Typ einer Alkoxy-, Arylalkoxy- oder Alkylarylalkoxygruppe dar, bei der die Kohlenstoffkette durch Sauerstoffatome unterbrochen sein kann, oder R¹ bedeutet eine ggf. einfach oder mehrfach annelierte aromatische AryloxyGruppe, wobei der Rest R¹ im Silylpolyether 1 vorzugsweise kein Siliziumatom aufweist, sowie
- R²: oder R³, sowie R⁵ oder R⁶ gleich oder auch unabhängig voneinander H oder ein gesättigter oder gegebenenfalls einfach oder mehrfach ungesättigter, auch weiter substituierter, gegebenenfalls ein- oder mehrwertiger Kohlenwasserstoffrest, wobei für die Reste R⁵ oder R⁶ gilt, dass sie gleich einem einwertigen Kohlenwasserstoffrest sind. Der Kohlenwasserstoffrest kann cycloaliphatisch über das Fragment Y verbrückt sein; Y kann nicht vorhanden sein, oder aber eine Methylenbrücke mit 1 oder 2 Methyleneinheiten sein, ist Y nicht vorhanden, so sind R² oder R³ unabhängig voneinander gleich ein linearer oder verzweigter Rest mit 1 bis 20, bevorzugt 1 bis 10 Kohlenstoffatomen, besonders bevorzugt ein Methyl-, Ethyl-, Propyl- oder Butyl-, Vinyl-, Allylrest oder Phenylrest. Vorzugsweise ist zumindest einer der beiden Reste R² oder R³ Wasserstoff. R²-R³ kann eine -CH₂CH₂CH₂CH₂-Gruppe, Y damit eine -(CH₂CH₂-)-Gruppe sein. Die Kohlenwasserstoffreste R² und R³ können ihrerseits weiter substituiert sein und funktionelle Gruppen wie Halogene, Hydroxylgruppen oder Glycidyloxypropylgruppen tragen.
- R⁴: entspricht einem linearen oder verzweigten Alkylrest von 1 bis 24 Kohlenstoffatomen oder einem aromatischen oder cycloaliphatischen Rest, der gegebenenfalls seinerseits Alkylgruppen tragen kann;
- R⁷: und R⁸ sind unabhängig voneinander entweder Wasserstoff, Alkyl-, Alkoxy-, Aryl- oder Aralkylgruppen, die unter Ringöffnungspolymerisation zu vernetzbaren, Alkoxysilangruppen enthaltenden Polyetherestern copolymerisiert werden.
- R⁹,: R¹⁰, R¹¹ und R¹² sind unabhängig voneinander entweder Wasserstoff, Alkyl-, Alkenyl-, Alkoxy-, Aryl- oder Aralkylgruppen. Der Kohlenwasserstoffrest kann cycloaliphatisch oder aromatisch über das Fragment Z verbrückt sein, wobei Z sowohl einen divalenten Alkylen- als auch Alkenylenrest darstellen kann.

Wie ²⁹Si-NMR- und GPC-Untersuchungen ergeben, bedingt das verfahrensbedingte Vorhandensein von kettenendständigen OH-Gruppen die Möglichkeit zu Umesterungsreaktionen am Siliziumatom sowohl während der DMC-katalysierten Herstellung als auch z.B. in einem nachgeschalteten Prozessschritt. Dabei wird formal der über ein Sauerstoffatom an das Silizium gebundene Alkylrest R gegen einen langkettigen modifizierten Alkoxysilylpolymerrest ausgetauscht. Bimodale wie auch multimodale GPC Kurven belegen, dass die Alkoxylierungsprodukte neben den nicht umgeesterten Spezies, wie sie in Formel (1) wiedergegeben sind, solche mit der doppelten, zum Teil dreifachen oder gar vielfachen Molmasse enthalten. Formel (1) gibt mithin die komplexe chemische Realität nur vereinfacht wieder.

Somit stellen die Silylpolyether 1 Zusammensetzungen dar, die auch Verbindungen enthalten, in denen die Summe der Indices (a) plus (b) in Formel (1) im statistischen Mittel kleiner als 3 ist, da ein Teil der OR-Gruppen durch Silylpolyethergruppen ersetzt werden kann. Die Zusammensetzungen enthalten somit Spezies, die am Siliziumatom unter Abspaltung von R-OH und Kondensationsreaktion mit der reaktiven OH-Gruppe eines weiteren Moleküls der Formel (1) ausgebildet werden. Diese Reaktion kann mehrfach ablaufen bis z.B. alle RO-Gruppen am Silizium gegen weitere Moleküle der Formel (1) ausgetauscht sind. Das Vorhandensein von mehr als einem Signal in typischen ²⁹Si-NMR-Spektren dieser Verbindungen untermauert das Auftreten von Silylgruppen mit unterschiedlichem Substitutionsmuster.

Die angegebenen Werte und Vorzugsbereiche für die Indizes (a) bis (j) sind somit auch nur als Mittelwerte über die verschiedenen, einzeln nicht fassbare Spezies zu verstehen. Die Vielfalt an chemischen Strukturen und Molmassen spiegelt sich auch in den für Silylpolyether 1 typischen und für konventionelle DMC-basierende Polyether völlig ungewöhnlichen breiten Molmassenverteilungen von M_{w}/Mₙ von meist ≥ 1,5 wieder.

Als Starter oder Startverbindungen für die Alkoxylierungsreaktion können alle Verbindungen der Formel (3)

R¹-H (3)

(das H gehört zur OH-Gruppe einer mindestens eine Hydroxygruppe aufweisenden Verbindung, wie z. B. eines Alkohols oder einer phenolischen Verbindung) allein oder in Mischungen miteinander eingesetzt werden, die gemäß Formel (3) mindestens eine reaktive Hydroxylgruppe aufweisen. R¹ entspricht einem gesättigten oder ungesättigten, gegebenenfalls verzweigten Rest, der über mindestens ein Sauerstoffatom einer Hydroxygruppe verfügt, oder stellt einen Polyetherrest vom Typ einer Alkoxy-, Arylalkoxy- oder Alkylarylalkoxygruppe dar, bei der die Kohlenstoffkette durch Sauerstoffatome unterbrochen sein kann, oder R¹ bedeutet eine ggf. einfach oder mehrfach annelierte aromatische Aryloxy-Gruppe. Die Kettenlänge der als Startverbindung einsetzbaren Alkoxy-, Arylalkoxy- oder Alkylarylalkoxygruppen aufweisenden Polyetherreste ist beliebig. Vo
rzugsweise enthält die Polyether-, Alkoxy-, Arylalkoxy- oder Alkyarylalkoxygruppe 1 bis 1.500 Kohlenstoffatome, besonders bevorzugt 2 bis 300 Kohlenstoffatome, insbesondere 2 bis 100 Kohlenstoffatome.

Unter Startverbindungen werden Substanzen verstanden, die den Anfang (Start) des herzustellenden Polyethermoleküls (1) bilden, das durch die Anlagerung von epoxidfunktionellen Monomeren erhalten wird. Die in dem Verfahren eingesetzte Startverbindung ist vorzugsweise ausgewählt aus der Gruppe der Alkohole, Polyetherole oder Phenole. Bevorzugt wird als Startverbindung ein ein- oder mehrwertiger Polyetheralkohol oder Alkohol R¹-H (das H gehört zur OH-Gruppe des Alkohols oder Phenols) eingesetzt.
Als OH-funktionelle Startverbindungen R¹-H (3) werden vorzugsweise Verbindungen mit Molmassen von 18 bis 10.000 g/mol, insbesondere 50 bis 2000 g/mol und mit 1 bis 8, bevorzugt mit 1 bis 4 Hydroxylgruppen eingesetzt.

Beispielhaft für Verbindungen der Formel (3) seien Allylalkohol, Butanol, Octanol, Dodecanol, Stearylalkohol, 2-Ethylhexanol, Cyclohexanol, Benzylalkohol, Ethylenglykol, Propylenglykol, Di-, Tri- und Polyethylenglykol, 1,2-Propylenglykol, Di- und Polypropylenglykol, 1,4-Butandiol, 1,6-Hexandiol, Trimethylolpropan, Glycerin, Pentaerythrit, Sorbit, Cellulosezucker, Lignin oder auch weitere auf Naturstoffen basierende, Hydroxylgruppen tragende Verbindungen, genannt.

Vorteilhaft werden niedermolekulare Polyetherole mit 1 bis 8 Hydroxylgruppen und Molmassen von 50 bis 2000 g/mol, die ihrerseits zuvor durch DMC-katalysierte Alkoxylierung hergestellt wurden, als Starterverbindungen verwendet.

Neben Verbindungen mit aliphatischen und cycloaliphatischen OH-Gruppen eignen sich beliebige Verbindungen mit 1 bis 20 phenolischen OH-Funktionen. Hierzu gehören beispielspweise Phenol, Alkyl- und Arylphenole, Bisphenol A und Novolake.

Die verschiedenen Monomereinheiten sowohl der Fragmente mit den Indexzahlen d bis j als auch der eventuell vorhandenen Polyoxyalkylenkette des Substituenten R¹ können untereinander blockweise aufgebaut sein oder aber auch einer statistischen Verteilung unterliegen.

Die in den hier angeführten Formeln wiedergegebenen Indexzahlen und die Wertbereiche der angegebenen Indizes verstehen sich daher als die Mittelwerte der möglichen statistischen Verteilung der tatsächlichen vorhandenen Strukturen und/oder deren Mischungen. Dies gilt auch für als solche an sich exakt wiedergegebene Strukturformeln, wie beispielsweise für Formel (1).

Je nach verwendetem epoxidfunktionellem Alkoxysilan und evtl. eingesetzten weiteren Monomeren, sowie evtl. auch Kohlendioxid können modifizierte Alkoxysilylgruppen tragende Polyetheralkohole (1) hergestellt werden, sowie deren beliebig aufgebaute Gemische. Bevorzugt ist die Alkoxysilaneinheit in der Verbindung der Formel (1) eine Trialkoxysilaneinheit.

Die erfindungsgemäßen härtbaren Mischungen, enthaltend bevorzugt mindestens eine Komponente der Formel (2) oder (2a) und mindestens eine Komponente der Formel (1), können z. B. zur Beschichtung und Modifizierung von flächigen, partikulären, faserigen Oberflächen und Geweben und als Dichtstoffe eingesetzt werden. Die Beschichtung kann z. B. eine Klebstoffbeschichtung, insbesondere eine geschäumte Klebstoffbeschichtung sein. Die härtbare Mischung kann auch in Form einer Emulsion oder Lösung, vorzugsweise als wässrige Emulsion, eingesetzt werden.
Sollen diese erfindungsgemäßen Zusammensetzungen schäumbar sein, enthalten diese ein oder mehrere, gegebenenfalls chemisch gebildete Treibmittel.

Die zu beschichtenden Oberflächen können durch bekannte Mittel wie sprühen, streichen, tauchen, etc. beschichtet werden. Die zu verklebenden Oberflächen werden bei dem Verfahren vorzugsweise aufeinandergepresst. Das Aufbringen der gegebenenfalls schäumbaren Mischung zur Herstellung der Verklebung erfolgt vorzugsweise aus einer Druckdose, wobei die Schaumbildung durch das in der Mischung enthaltene, gegebenenfalls auch durch chemische Reaktion freigesetzte, Treibmittel erfolgt. Die Herstellung und Anwendung von Klebschäumen ist in der noch nicht vorveröffentlichten Schrift DE 10 2008 043218 näher beschrieben.

Somit ist ein weiterer Gegenstand der Erfindung ein Verfahren zum Verkleben von Oberflächen, bei dem eine schäumbare Zusammensetzung bereitgestellt wird, die zwischen den zu verklebenden Oberflächen zu einem Schaum verschäumt wird, oder aber der aus der Mischung herstellbare Schaum nach der Verschäumung auf einer der zu verklebenden Oberflächen oder zwischen den zu verklebenden Oberflächen aufgebracht wird, und der Schaum anschließend zwischen den zu verklebenden Oberflächen zerdrückt wird.

Als Treibmittel sind bereits bei relativ geringen Drücken kondensierbare Gase geeignet, die auch zur Herstellung sprühbarer Montageschäume verwendet werden. Gängige Treibmittel sind beispielsweise Kohlenwasserstoffe mit jeweils 1 bis 5, insbesondere 3 bis 5 Kohlenstoffatomen, insbesondere Propan-Butan-Mischungen oder Isobutan, Fluorkohlenwasserstoffe mit 1-5 Kohlenstoffatomen, z.B. 1,1,1,2-Tetrafluorethan oder 1,1-Difluorethan, oder Dimethylether sowie entsprechende Mischungen. Der Treibmittelgehalt liegt vorzugsweise bei < 10 Gew.-%, besonders bevorzugt bei < 7 bzw. < 5 Gew.-% bezogen auf die gesamte Mischung.
Bevorzugt liegt der Gehalt der Treibmittel bezogen auf die gesamte Mischung bei maximal 10 Gew.-% besonders bevorzugt bei maximal 7 Gew.-%.
Die Schaumbildung kann auch ohne Zugabe eines Treibmittels auf rein chemischer Basis erfolgen, hier allerdings bevorzugt im Fall einer Warm- oder Heißhärtung. Hierbei wird bei Erwärmung der Klebemischung ein niedrigflüchtiges Treibmittel gebildet, das beispielsweise Alkohole wie Methanol, Ethanol umfasst, die aus der Hydrolyse der Alkoxysilylgruppe entstanden sind. Auch kann Wasser oder ein inertes Lösungsmittel bei erhöhter Temperatur als Treibmittel dienen.
Wird eine Beschichtung eines Substrats erwünscht, so kann in einfacher Weise auf das Treibmittel verzichtet werden, und gegebenenfalls durch Zugabe von Lösungsmitteln oder weiteren Additiven und Hilfsstoffen, die für Beschichtungen erforderlichen Materialeigenschaften gezielt eingestellt werden. Gegenstand der vorliegenden Erfindung ist deshalb auch ein Verfahren zum Beschichten bzw. zum modifizieren von Oberflächen, wobei eine Zusammensetzung, die Silylpolyether 1 mit mindestens einer weiteren Silanverbindung der Formel (2) oder (2a) enthält, auf die zu behandelnde Oberfläche appliziert und ausgehärtet wird.
Als Katalysatoren für die Vernetzung oder Polymerisation der erfindungsgemäßen Präpolymermischungen können die bekannten Polyurethanisierungs-, Allophanatisierungs- oder Biuretisierungskatalysatoren verwendet werden, die dem Fachmann an sich bekannt sind. Hierzu zählen Verbindungen, wie beispielsweise die Zinksalze Zinkoctoat, Zinkacetylacetonat und Zink-2-ethylcaproat, oder Tetraalkylammoniumverbindungen, wie N,N,N-Trimethyl-N-2-hydroxypropylammoniumhydroxid, N,N,N-Trimethyl-N-2-hydroxypropylammonium-2-ethylhexanoat oder Cholin-2-ethylhexanoat verwendet werden. Bevorzugt ist die Verwendung von Zinkoctoat (Zink-2-ethylhexanoat) und der Tetraalkylammoniumverbindungen, besonders bevorzugt diejenige von Zinkoctoat. Weiterhin können als Katalysatoren die üblicherweise verwendeten organischen Zinnverbindungen, wie z.B. Dibutylzinndilaurat, Dioctylzinndilaurat, Dibutylzinndiacetylacetonat, Dibutylzinndiacetat oder Dibutylzinndioctoat etc., verwendet werden. Des Weiteren können auch Bismutkatalysatoren, z.B. der Bor-chi-Katalysator, Titanate, z.B. Titan(IV)isopropylat, Eisen(III)-Verbindungen, z.B. Eisen(III)-acetylaceto-nat, oder auch Amine, z.B. Triethylamin, Tributyla-min, 1,4-Diazabicyclo[2,2,2]octan, 1,8-Diazabicyclo[5.4.0]undec-7-en, 1,5-Diazabicyclo[4.3.0]non-5-en , N ,N-Bis-(N,N-dimethyl-2-aminoethyl)-methylamin, N , N-Dimethylcyclohexylamin, N,N-Dimethylphenylamin, N-Ethylmorpholin etc., eingesetzt werden. Auch organische oder anorganische Brönstedsäuren wie Essigsäure, Trifluoressigsäure, Methansulfonsäure, Toluolsulfonsäure oder Benzoylchlorid, Salzsäure, Phoshorsäure deren Mono- und/oder Diester, wie z.B. Butylphosphat, (Iso-)Propylphosphat, Dibutylphosphat etc., sind als Katalysatoren geeignet. Selbstverständlich können auch Kombinationen mehrerer Katalysatoren eingesetzt werden.

Die erfindungsgemäßen härtbaren Zusammensetzungen können auch sogenannte photolatente Basen als Katalysatoren enthalten, wie sie in der WO 2005/100482 beschrieben sind. Unter photolatenten Basen sind vorzugsweise organische Basen mit einem oder mehreren basischen Stickstoffatomen zu verstehen, die zunächst in einer blockierten Form vorliegen und erst nach Bestrahlung mit UV-Licht, sichtbarem Licht oder IR-Strahlung durch Spaltung des Moleküls die basische Form freisetzen. Der Inhalt der Beschreibung und der Ansprüche WO 2005/100482 wird hiermit als Bestandteil dieser Offenbarung eingeführt.

Der Katalysator bzw. die photolatente Base wird in Mengen von 0,001 bis 5,0 Gew.-%, bevorzugt 0,01 bis 1,0 Gew.-% und besonders bevorzugt 0,05 bis 0,5 Gew.-% bezogen auf den Festgehalt des Verfahrensprodukts eingesetzt. Der Katalysator bzw. die photolatente Base kann in einer Portion oder aber auch portionsweise oder auch kontinuierlich zugegeben werden. Bevorzugt ist Zugabe der gesamten Menge in einer Portion.
Als weitere Komponenten können die Zusammensetzungen Füllstoffe, Lösungsmittel, Schaumstabilisatoren sowie Katalysatoren zur Beschleunigung der Aushärtung des Schaumes enthalten. Füllstoffe führen dabei zu einer Verbesserung der Reißfestigkeit wie auch der Bruchdehnung. Gängige Füllstoffe sind beispielsweise Calciumcarbonat, pyrogene Kieselsäure und Ruß. Die unterschiedlichen Füllstoffe werden oftmals auch in Kombination eingesetzt. Als Füllstoffe eignen sich dabei sämtliche Materialien, wie sie im Stand der Technik vielfach beschrieben sind. Die Füllstoffe werden bevorzugt in einer Konzentration von 0 bis 90 Gew.-% bezogen auf die fertige Mischung eingesetzt, wobei Konzentrationen von 5 bis 70 Gew.-% besonders bevorzugt sind.
Die erfindungsgemäßen Zusammensetzungen können zudem auch noch weitere organische Substanzen, bevorzugt Flüssigkeiten und Lösungsmittel enthalten. Als Lösungsmittel werden bevorzugt Verbindungen eingesetzt, die über ein Dipolmoment verfügen. Besonders bevorzugte Lösungsmittel verfügen über ein Heteroatom mit freien Elektronenpaaren, die Wasserstoffbrückenbindungen eingehen können. Bevorzugte Beispiele für solche Lösungsmittel sind Ether wie z.B. t-Butyl-methylether, Ester, wie z.B. Ethylacetat oder Butylacetat sowie Alkohole, wie z.B. Methanol, Ethanol sowie die verschiedenen Regioisomere des Propanols und Butanols oder auch anwendungsspezifisch ausgewählte Glykoltypen.

Des Weiteren können den Zusammensetzungen auch an sich bekannte funktionelle Stoffe wie rheologische Additive, Wasserfänger, Thixotropiermittel, Flammschutzmittel, Entschäumer, Entlüfter, filmbildende Polymere, antimikrobielle und konservierende Stoffe, Antioxidantien, Farbstoffe, Färbemittel und Pigmente, Frostschutzmittel, Fungizide, Haftvermittler und/oder Reaktivverdünner sowie Weichmacher und Komplexbildner, Sprühhilfsmittel, Netzmittel, Vitamine, Wuchsstoffe, Hormone, Duftstoffe, Lichtschutzmittel, Radikalfänger, UV-Absorber sowie weitere Stabilisatoren zugesetzt werden.

Für die erfindungsgemäßen Zusammensetzungen existieren zahllose verschiedene Anwendungen im Bereich der Kleb-, Dicht-, Binde- und Fugendichtstoffe. Dabei sind sie für zahllose unterschiedliche Untergründe, wie z.B. mineralische Untergründe, Metalle, Kunststoffe, Glas, Keramik, Holz, Holzwerkstoffe, Naturfaser oder auch Kork etc., geeignet. Prinzipiell eignen sich die Zusammensetzungen bzw. die daraus hergestellten Schäume zum Verkleben von jedweden Gegenständen. Vor allem aber sind sie hoch geeignet, wenn die zu verklebenden Flächen uneben sind oder aber kleinteilige Fasern oder Partikel, sowie auch beispielsweise Kork, miteinander zu einem Verbundwerkstoff verbunden werden sollen. Dies ist z.B. beim Verkleben von Bruchstellen, die durch Absplitterungen oder Materialverbiegungen nicht mehr genau übereinander passen, der Fall, oder auch beim Verkleben von Fußleisten, Deckenleisten oder sonstigen Verzierungen auf einer unebenen Wandoberfläche. Hier besitzen die Schäume den Vorteil, auch Hohlräume gut ausfüllen zu können.
Ein weiterer Gegenstand der Erfindung sind somit auch aus den härtbaren Mischungen gewonnene Verbundwerkstoffe wie beispielsweise Holzverbundstoffe wie MDF-Platten (mitteldichte Faserplatten), Spanplatten, Korkartikel, laminierte Artikel.

Eine weitere erfindungsgemäße Anwendung der Alkoxysilylgruppen tragenden Verbindungen sind wässerige Emulsionen. Als Emulgatoren für solche Emulsionen kommen prinzipiell sämtliche anionischen, nicht-ionischen, kationischen und amphoteren Emulgatoren sowie Emulgatormischungen in Betracht. Bevorzugte Beispiele von solchen Emulgatoren sind Alkoholethoxylate, Fettsäureethoxylate, ethoxylierte Ester, und (ethoxylierte) Sorbitanester.

Die erfindungsgemäßen Zusammensetzungen und deren Verwendung werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören.

Weitere Ausgestaltungen der Erfindung ergeben sich aus den Ansprüchen, deren Offenbarungsgehalt vollumfänglich Teil dieser Beschreibung ist.

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

### Experimenteller Teil:

In den nachfolgenden Beispielen wurde der folgende Alkoxysilylgruppen enthaltende Polyether SP-1 eingesetzt, der gemäß dem in der noch nicht offengelegten Schrift DE 10 2008 000360.3 nach dem Verfahrensprinzip der DMC-katalysierten Alkoxylierung von 3-Glycidyloxypropyltriethoxysilan (GLYEO) ist:

### Silylpolyether SP-1:

Niedermolekularer, Octanol-gestarteter, fast farbloser und niedrig viskoser, weitgehend statistisch aufgebauter Polyether der mittleren Molmasse von ca. 3000 g/mol und siebenfacher Trialkoxysilanfunktionalität.
Chemischer Aufbau gemäß Monomerendosage: 1-Octanol + 8 mol PO + (7 mol GLYEO / 10 mol PO)
Epoxidsauerstoffgehalt <0,05 %, M_{w} lt. GPC 2760 g/mol, Viskosität (25,0 °C): 0,15 Pa.s

MS Polymer^{©} S303H
der Firma Kaneka, ein kettenendständig -Si(CH₃)(OCH₃)₂-funktionalisiertes herkömmliches alkoxysilylterminiertes Polypropylenglykol mit einer mittleren Molmasse von ca. 12.000 g/mol, Viskosität (25,0 °C): 12,0 Pa.s

Geniosil^{©} STP-E10
der Firma Wacker, ein kettenendständig -Si(CH₃)(OCH₃)₂-funktionalisiertes alkoxysilyl-methylcarbamatterminiertes Polypropylenglykol mit einer mittleren Molmasse von ca. 11.500 g/mol.

Die folgenden homogenen Zusammensetzungen aus vorgenannten Einzelkomponenten wurden durch Mischen hergestellt:

| | | | |
|---|---|---|---|
| Blend 1: | 50 Gew.-% SP-1 | / | 50 Gew.-% MS Polymer^{©} S303H |
| Blend 2: | 10 Gew.-% SP-1 | / | 90 Gew.-% MS Polymer^{©} S303H |
| Blend 3: | 90 Gew.-% SP-1 | / | 10 Gew.-% Geniosil^{©} STP-E10 |

Die mechanischen Eigenschaften und Härtungscharakteristiken der Einzelkomponenten sowie ausgewählter härtbarer erfindungsgemäßer Zusammensetzungen wurden bei 25 °C mittels oszillationsrheologischer Messungen untersucht. Die Beträge des Speichermoduls G' als Maß für den elastischen Anteil und des Verlustmoduls G" als Maß für den viskosen Verlustanteil wurden während der Härtung, beginnend mit der Katalysatordosage, laufend untersucht. Katalysiert wurde mit 2 % einer 5 %igen wässrigen p-Toluolsulfonsäurelösung. Der Auslenkungswinkel betrug 1 Grad, die Frequenz 1 Hz. Die Kurvenverläufe von G' und G" geben Auskunft über den Anstieg der mechanischen Festigkeit im Laufe der Härtung und erlauben u.a. Aussagen zur Reaktivität und Verarbeitungszeit.

Figur 2 zeigt die oszillationsrheologischen Untersuchungen von SP-1, Blend 1 und Blend 2 im Vergleich.

Die mechanischen und Verarbeitungseigenschaften lassen sich durch geeignete Wahl der Zusammensetzung der härtbaren Mischung flexibel an die jeweiligen Anwendungsbedürfnisse anpassen. Mit zunehmendem Anteil an Silylpolyether SP-1 sinkt die Anfangsviskosität der härtbaren Zusammensetzung (Reaktivverdünnereffekt von SP-1) und bleibt das System länger verarbeitbar, während gleichzeitig höhere Härten im Endmaterial (hohes G' bei niedrigem G") erzielt werden.

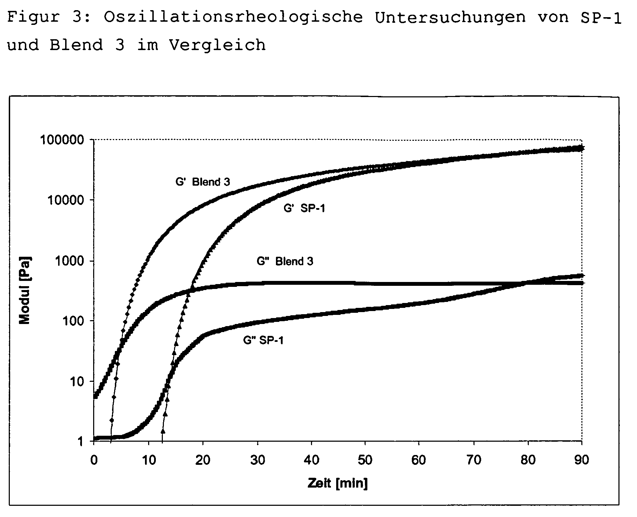

Figur 3 zeigt die oszillationsrheologischen Untersuchungen von SP-1 und Blend 3 im Vergleich.

Durch eine Kombination von 90 % Silylpolyether SP-1 mit 10 % des hoch reaktiven α-Silangruppen tragenden Silanpräpolymeren Geniosil^{©} STP-E10 zu einer erfindungsgemäßen härtbaren Zusammensetzung lassen sich die charakteristischen Eigenschaften beider so unterschiedlicher Einzelkomponenten ideal kombinieren.

Das Ausgangssystem ist vorteilhaft niedrig viskos, durch den STP-E10-Anteil wird die Anhärtung beschleunigt (kurze Klebfreizeit) und das Endprodukt erreicht nach der Vernetzung die gewünschte hohe mechanische Festigkeit wie bei pur eingesetztem SP-1.

## Patentansprüche

1. Härtbare Zusammensetzungen enthaltend Silylgruppen tragende Hydroxylverbindungen der Formel 1 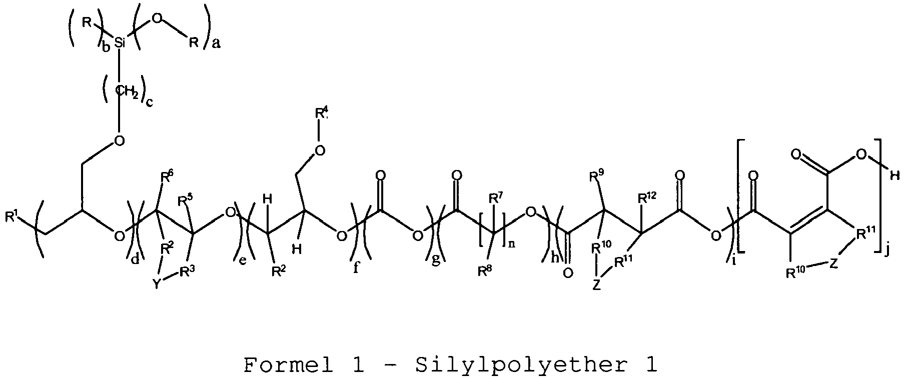 wobei
a eine ganze Zahl von 1 bis 3,
b eine ganze Zahl von 0 bis 2, und die Summe von a und b gleich 3 ist,
c eine ganze Zahl von 0 bis 22,
d eine ganze Zahl von 1 bis 1.000 ist,
e eine ganze Zahl von 0 bis 10.000 ist,
f eine ganze Zahl von 0 bis 1.000 ist,
g eine ganze Zahl von 0 bis 1.000 ist,
h, i und j ganze Zahlen von 0 bis 500 sind,
n eine ganze Zahl zwischen 2 und 8 ist
und mit der Maßgabe, dass die Fragmente mit den Indices d bis j untereinander frei permutierbar, d.h. in der Sequenz innerhalb der Polyetherkette gegeneinander austauschbar sind
und
R einen oder mehrere gleiche oder verschiedene Reste, ausgewählt aus linearen oder verzweigten, gesättigten, einfach oder mehrfach ungesättigten Alkylresten mit 1 bis 20 Kohlenstoffatomen oder Halogenalkylgruppen mit 1 bis 20 Kohlenstoffatomen darstellen, sowie
R¹ gleich einem gesättigten oder ungesättigten, gegebenenfalls verzweigten Rest, der über ein Sauerstoffatom angebunden ist, oder einen Polyetherrest vom Typ einer Alkoxy-, Arylalkoxy- oder Alkylarylalkoxygruppe darstellt, bei der die Kohlenstoffkette durch Sauerstoffatome unterbrochen sein kann, oder ein Polyether¬alkoxyrest oder eine ggf. einfach oder mehrfach annelierte aromatische Aryloxy-Gruppe ist,
R² oder R³, sowie R⁵ oder R⁶ gleich oder auch unabhängig voneinander H oder ein gesättigter oder einfach oder mehrfach ungesättigter, auch weiter substituierter, ein- oder mehrwertiger Kohlenwasserstoffrest, wobei für die Reste R⁵ oder R⁶ gilt, dass sie gleich einem einwertigen Kohlenwasserstoffrest sind und der Kohlenwasserstoffrest cycloaliphatisch über das Fragment Y verbrückt sein kann; Y kann nicht vorhanden sein, oder aber eine Methylenbrücke mit 1 oder 2 Methyleneinheiten sein, ist Y nicht vorhanden, so sind R² oder R³ unabhängig voneinander gleich ein linearer oder verzweigter Rest mit 1 bis 20 Kohlenstoffatomen,
R⁴ entspricht einem linearen oder verzweigten Alkylrest von 1 bis 24 Kohlenstoffatomen oder einem aromatischen oder cycloaliphatischen Rest, der gegebenenfalls seinerseits Alkylgruppen tragen kann;
R⁷ und R⁸ sind unabhängig voneinander entweder Wasserstoff, Alkyl-, Alkoxy-, Aryl- oder Aralkylgruppen, die unter Ringöffnungspolymerisation zu vernetzbaren, Alkoxysilangruppen enthaltenden Polyetherestern copolymerisiert werden,
R⁹, R¹⁰, R¹¹ und R¹² sind unabhängig voneinander entweder Wasserstoff, Alkyl-, Alkenyl-, Alkoxy-, Aryl- oder Aralkylgruppen, wobei der Kohlenwasserstoffrest cycloaliphatisch oder aromatisch über das Fragment Z verbrückt sein kann und Z sowohl einen divalenten Alkylen- als auch Alkenylenrest darstellen kann,
sowie zumindest eine weitere von Formel 1 verschiedene Silanverbindung.

2. Zusammensetzung nach Anspruch 1, **dadurch gekennzeichnet, dass** als Silanverbindung ein alkoxysilylfunktionelles Präpolymer, ein alkoxysilylterminierter Polyether, Polyester, Polyetherester, Polyurethan, ein Alkoxysilylgruppen aufweisendes Polysiloxan oder Polyethersiloxan oder deren Mischungen verwendet werden.

3. Zusammensetzung nach Anspruch 1 oder 2, **dadurch gekennzeichnet, dass** die Silanverbindung ein Silanmodifiziertes Polymer der Formel (2) ist, 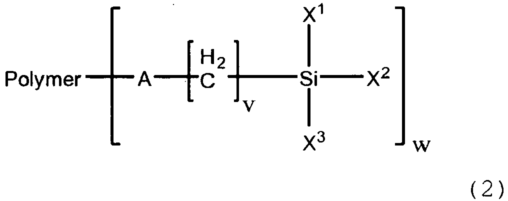 wobei
X¹, X² und X³ unabhängig voneinander Alkyl- oder Alkoxyreste mit 1-8 C-Atomen sind,
A einen Carboxy-, Carbamat-, Amid-, Carbonat-, Ureido- oder Sulfonatgruppe enthaltenden Rest darstellt oder ein Sauerstoffatom bedeutet,
w eine ganze Zahl von 1 bis 8 ist und
v eine ganze Zahl von 1 bis 20 ist sowie Polymer ein Polymerrest ist ausgewählt aus einer Gruppe bestehend aus Alkydharzen, ölmodifizierten Alkydharzen, gesättigten oder ungesättigten Polyestern, natürlichen Ölen, Epoxiden, Polyamiden, Polycarbonaten, Polyethylenen, Polypropylenen, Polybutylenen, Polystyrolen, Ethylen-Propylen-Copolymeren, (Meth)acrylaten, (Meth)acrylamiden und deren Salzen, Phenolharzen, Polyoxymethylen-Homo- und -Copolymeren, Polyurethanen, Polysulfonen, Polysulfidkautschuken, Nitrocellulosen, Vinylbutyraten, Vinylpolymeren, Ethylcellulosen, Celluloseacetaten und/oder -butyraten, Reyon, Schellack, Wachsen, Ethylencopolymeren, organischen Kautschuken, Polysiloxanen, Polyethersiloxanen, Siliconharzen, Polyethern, Polyetherestern und/oder Polyethercarbonaten.

4. Zusammensetzung nach Anspruch 3, **dadurch gekennzeichnet, dass** als alkoxysilylfunktionelles Präpolymer der Formel (2) α-Silan-terminierte Polymere verwendet werden, deren reaktive Alkoxysilylgruppen nur durch eine Methyleneinheit, v = 1, von einer Stickstoff-haltigen Polymer-gebundenen Gruppe A getrennt ist.

5. Zusammensetzung nach zumindest einem der Ansprüche 1 bis 4, **dadurch gekennzeichnet, dass** der Silylpolyether 1 mit Dimethoxy(methyl)silyl-methylcarbamat- und/oder Trimethoxysilyl-methylcarbamat-terminierten Polyethern gemischt wird.

6. Zusammensetzung nach zumindest einem der Ansprüche 1 bis 3, **dadurch gekennzeichnet, dass** der Silylpolyether (1) zusammen mit Silanpolymeren der Formel (2) verwendet wird, in denen die Silangruppen terminal über eine Propyleneinheit, v = 3, an ein Polymergerüst gebunden sind und bei denen die Bindegruppe A eine Urethangruppe ist oder einen Harnstoffgruppen tragenden Rest darstellt.

7. Zusammensetzung nach Anspruch 6, **dadurch gekennzeichnet, dass** als Silanpolymere der Formel (2) Dimethoxy(methyl)silyl-propylcarbamat- und/oder Trimethoxysilyl-propylcarbamat-terminierte Polyether verwendet werden.

8. Zusammensetzung nach Anspruch 3, **dadurch gekennzeichnet, dass** der Silylpolyether 1 zusammen mit Silanpolymeren der Formel (2) verwendet wird, in denen Urethan- und Harnstofffreie silylterminierte Polyether mit A gleich Sauerstoff verwendet werden.

9. Zusammensetzung nach Anspruch 1, **dadurch gekennzeichnet, dass** der Silylpolyether 1 zusammen mit monomeren Silanen der Formel (2a) verwendet wird,
WₓSiV₍₄₋ₓ₎ (2a)
wobei
W gleiche oder verschiedene nicht hydrolysierbare Gruppen,
V gleiche oder verschiedene hydrolysierbare Gruppen oder Hydroxygruppen und
x 1, 2, 3 oder 4 ist
und die hydrolysierbaren Gruppen V ausgewählt sind aus der Gruppe beinhaltend Wasserstoff, Halogen-, Alkoxy-, Aryloxy-, Acyloxy-, Acyl-, Amino-, Monoalkylamino- und/oder Dialkylamino-Gruppen sowie der nicht hydrolysierbare Rest W ausgewählt ist aus der Gruppe beinhaltend Alkyl-, Alkenyl-, Alkinyl-, Aryl-, Alkylaryl- oder Aralkyl-Restem wobei die Alkylkette 0 bis 50 Kohlenstoffatome aufweisen und auch durch Heteroatome wie Sauerstoff oder Stickstoff oder Schwefel unterbrochen sein kann oder auch ein Siliconrest sein kann, der Arylrest kann auch heteroaromatisch sein und die Reste W und V durch einen oder mehrere Substituenten weiter substituiert sein.

10. Zusammensetzung nach Anspruch 9, **dadurch gekennzeichnet, dass** der nicht hydrolysierbare Rest W nach der Formel (2a) funktionelle Gruppen ausgewählt ist aus der Gruppe beinhaltend Glycidyl- oder Glycidyloxyalkylen-Reste, β-Glycidyloxyethyl, γ-Glycidyloxypropyl, δ-Glycidyloxypropyl, ε-Glycidyloxypentyl, ω-Glycidyloxyhexyl oder 2-(3,4-Epoxycyclohexyl)ethyl, Methacryloxyalkylen- und Acryloxyalkylen-Reste, Methacryloxymethyl, Acryloxymethyl, Methacryloxyethyl, Acryloxyethyl, Methacryloxypropyl, Acryloxypropyl, Methacryloxybutyl oder Acryloxybutyl, und/oder 3-Isocyanatopropyl-Rest.

11. Zusammensetzung nach Anspruch 9 oder 10, **dadurch gekennzeichnet, dass** als monomeres Silan N-Cyclohexylaminomethyltrimethoxysilan, N-Cyclohexyl-3-aminopropyltriethoxysilan, 3-Aminopropyltrimethoxysilan, Vinyltrimethoxysilan, Vinyltriethoxysilan, Vinyldimethoxymethylsilan, 3-Isocyanatopropyltrimethoxysilan, 3-Glycidyloxypropyltrimethoxysilan, 3-Glycidyloxypropyltriethoxysilan, 3-Methacryloxypropyltrimethoxysilan, Methyltrimethoxysilan, Methyltriethoxysilan, Dimethyldimethoxysilan, Phenyltriethoxysilan und/oder Hexadecyltrimethoxysilan allein oder in Mischungen miteinander verwendet wird.

12. Zusammensetzungen nach zumindest einem der Ansprüche 1 bis 11, **dadurch gekennzeichnet, dass** weitere Zusatzstoffe ausgewählt aus der Gruppe der Verdünner, Reaktivverdünner, Lösemittel, organische und anorganische Füllstoffe, Emulgatoren, Schaumhilfsmittel und Schaumstabilisatoren, rheologische Additive, Wasserfänger, Thixotropiermittel, Flammschutzmittel, Entschäumer, Entlüfter, filmbildende Polymere, antimikrobielle und konservierende Stoffe, Antioxidantien, Farbstoffe, Färbemittel und Pigmente, Frostschutzmittel, Fungizide, Haftvermittler und/oder Reaktivverdünner sowie Weichmacher und Komplexbildner, Sprühhilfsmittel, Netzmittel, Vitamine, Wuchsstoffe, Hormone, Duftstoffe, Lichtschutzmittel, Radikalfänger, UV-Absorber sowie weitere Stabilisatoren und/oder Katalysatoren verwendet werden.

13. Verwendung der Zusammensetzungen nach zumindest einem der Ansprüche 1 bis 12 in Kleb- und/oder Dichtstoffen.

14. Verwendung der Zusammensetzungen nach zumindest einem der Ansprüche 1 bis 12 in härtbaren Mischungen und deren Lösungen und/oder als wässrige Emulsion, als Grundstoffe für die Herstellung von Klebstoffen, zur Oberflächen¬beschichtung und -modifizierung, als reaktive Vernetzer, als Haftvermittler, Spreiter und/oder Primer sowie Bindemittel oder Dichtstoffe für verschiedene Substrate wie Metalle, Glas und Glasfasern/Glasgewebe, Holz, Holzwerkstoffen, Naturfasern, und/oder Kork oder silikatischen Materialien und zur Herstellung von Partikeln.

15. Kleb- oder Dichtstoffe enthaltend die Zusammensetzungen nach zumindest einem der Ansprüche 1 bis 12.

16. Schäumbarer Kleb- oder Dichtstoff nach Anspruch 15 **dadurch gekennzeichnet, dass** ein physikalischer und/oder chemisch freigesetztes Treibmittel mitverwendet wird.

17. Verfahren zum Verkleben von Oberflächen unter Verwendung eines Kleb- und Dichtstoffes nach Anspruch 16, **dadurch gekennzeichnet, dass** eine schäumbare Zusammensetzung zwischen den zu verklebenden Oberflächen zu einem Schaum verschäumt wird, oder aber der aus der Mischung herstellbare Schaum nach der Verschäumung auf einer der zu verklebenden Oberflächen oder zwischen den zu verklebenden Oberflächen aufgebracht wird, und der Schaum anschließend zwischen den zu verklebenden Oberflächen zerdrückt wird.

## Claims

1. Curable compositions comprising hydroxyl compounds which bear silyl groups and are of the formula 1 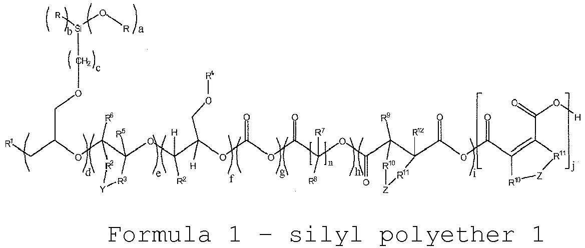 where
a is an integer from 1 to 3,
b is an integer from 0 to 2, and the sum of a and b is equal to 3,
c is an integer from 0 to 22,
d is an integer from 1 to 1000,
e is an integer from 0 to 10 000,
f is an integer from 0 to 1000,
g is an integer from 0 to 1000,
h, i and j are each integers from 0 to 500,
n is an integer from 2 to 8,
and with the proviso that the fragments with the indices d to j are freely permutable with one another, i.e. are exchangeable for one another in the sequence within the polyether chain,
and
R represents one or more identical or different radicals selected from linear or branched, saturated or mono- or polyunsaturated alkyl radicals having 1 to 20 carbon atoms or haloalkyl groups having 1 to 20 carbon atoms, and
R¹ is a saturated or unsaturated, optionally branched radical attached via an oxygen atom, or a polyether radical of the alkoxy, arylalkoxy or alkylarylalkoxy group type in which the carbon chain may be interrupted by oxygen atoms, or a polyetheralkoxy radical or an optionally singly or multiply fused aromatic aryloxy group,
R² and R³, and R⁵ and R⁶, are the same, or else are each independently, H or a saturated or mono- or polyunsaturated, also further-substituted, optionally mono- or polyvalent hydrocarbon radical, it being the case the R⁵ and R⁶ radicals are each a monovalent hydrocarbon radical and the hydrocarbon radical might be cycloaliphatically bridged via the Y fragment; Y may be absent, or else may be a methylene bridge having 1 or 2 methylene units; if Y is absent, R² and R³ are each independently a linear or branched radical having 1 to 20 carbon atoms,
R⁴ is a linear or branched alkyl radical of 1 to 24 carbon atoms or an aromatic or cycloaliphatic radical which may optionally in turn bear alkyl groups,
R⁷ and R⁸ are each independently hydrogen, alkyl, alkoxy, aryl or aralkyl groups which are copolymerized with ring-opening polymerization to give crosslinkable polyether esters containing alkoxysilane groups,
R⁹, R¹⁰, R¹¹ and R¹² are each independently hydrogen, alkyl, alkenyl, alkoxy, aryl or aralkyl groups, where the hydrocarbon radical may be bridged cycloaliphatically or aromatically via the Z fragment, and Z may be either a divalent alkylene or alkenylene radical,
and at least one further silane compound different from formula 1.

2. Composition according to Claim 1, **characterized in that** the silane compound used is an alkoxysilylfunctional prepolymer, an alkoxysilyl-terminated polyether, polyester, polyether ester, polyurethane, a polysiloxane or polyether siloxane having alkoxysilyl groups, or mixtures thereof.

3. Composition according to Claim 1 or 2, **characterized in that** the silane compound is a silane-modified polymer of the formula (2) 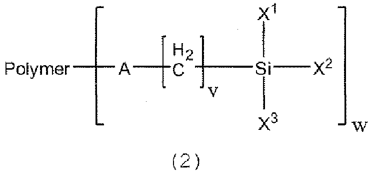 where
A X¹, X² and X³ are each independently alkyl or alkoxy radicals having 1-8 carbon atoms, is a radical containing a carboxyl, carbamate, amide, carbonate, ureido or sulfonate group, or an oxygen atom,
w is an integer from 1 to 8 and
v is an integer from 1 to 20, and polymer is a polymer radical selected from a group consisting of alkyd resins, oil-modified alkyd resins, saturated or unsaturated polyesters, natural oils, epoxides, polyamides, polycarbonates, polyethylenes, polypropylenes, polybutylenes, polystyrenes, ethylene-propylene copolymers, (meth)acrylates, (meth)acrylamides and salts thereof, phenol resins, polyoxymethylene homo- and copolymers, polyurethanes, polysulfones, polysulfide rubbers, nitrocelluloses, vinyl butyrates, vinyl polymers, ethylcelluloses, cellulose acetates and/or butyrates, rayon, shellac, waxes, ethylene copolymers, organic rubbers, polysiloxanes, polyether siloxanes, silicone resins, polyethers, polyether esters and/or polyether carbonates.

4. Composition according to Claim 3, **characterized in that** the alkoxysilyl-functional prepolymers of the formula (2) used are α-silane-terminated polymers whose reactive alkoxysilyl groups are separated only by one methylene unit, v = 1, from a nitrogen-containing polymer-bound A group.

5. Composition according to at least one of Claims 1 to 4, **characterized in that** the silyl polyether 1 is mixed with dimethoxy(methyl)silylmethyl carbamate- and/or trimethoxysilylmethyl carbamate-terminated polyethers.

6. Composition according to at least one of Claims 1 to 3, **characterized in that** the silyl polyether (1) is used together with silane polymers of the formula (2) in which the silane groups are bonded terminally via a propylene unit, v = 3, to a polymer structure and in which the binding group A is a urethane group or is a radical bearing urea groups.

7. Composition according to Claim 6, **characterized in that** the silane polymers of the formula (2) used are dimethoxy(methyl)silylpropyl carbamate- and/or trimethoxysilylpropyl carbamate-terminated polyethers.

8. Composition according to Claim 3, **characterized in that** the silyl polyether 1 is used together with silane polymers of the formula (2) in which urethane- and urea-free silyl-terminated polyethers where A is oxygen are used.

9. Composition according to Claim 1, **characterized in that** the silyl polyether 1 is used together with monomeric silanes of the formula (2a)
WₓSiV₍₄₋ₓ₎ (2a)
where
W represents identical or different nonhydrolyzable groups,
V represents identical or different hydrolyzable groups or hydroxyl groups and
x is 1, 2, 3 or 4
and the hydrolyzable V groups are selected from the group comprising hydrogen, halogen, alkoxy, aryloxy, acyloxy, acyl, amino, monoalkylamino and/or dialkylamino groups, and the nonhydrolyzable W radical is selected from the group comprising alkyl, alkenyl, alkynyl, aryl, alkylaryl and aralkyl radicals, where the alkyl chain may have 0 to 50 carbon atoms and may also be interrupted by heteroatoms such as oxygen or nitrogen or sulfur, or else be a silicone radical, the aryl radical may also be heteroaromatic, and the W and V radicals may each have further substitution by one or more substituents.

10. Composition according to Claim 9, **characterized in that** the nonhydrolyzable W radical according to the formula (2a) functional groups is selected from the group comprising glycidyl or glycidyloxyalkylene radicals, β-glycidyloxyethyl, γ-glycidyloxypropyl, δ-glycidyloxypropyl, ε-glycidyloxypentyl, ω-glycidyloxyhexyl or 2-(3,4-epoxycyclohexyl)ethyl, methacryloyloxy-alkylene and acryloyloxyalkylene radicals, methacryloyloxymethyl, acryloyloxymethyl, methacryloyloxyethyl, acryloyloxyethyl, methacryloyloxypropyl, acryloyloxypropyl, methacryloyloxybutyl or acryloyloxybutyl, and/or 3-isocyanatopropyl radical.

11. Composition according to Claim 9 or 10, **characterized in that** the monomeric silane used is N-cyclohexylaminomethyltrimethoxysilane, N-cyclohexyl-3-aminopropyltriethoxysilane, 3-aminopropyltrimethaxysilane, vinyltrimethoxysilane, vinyltriethoxysilane, vinyldimethoxymethylsilane, 3-isocyanatopropyltrimethoxysilane, 3-glycidyloxypropyltrimethoxysilane, 3-glycidyloxypropyltriethoxysilane, 3-methacryloyloxypropyltrimethoxysilane, methyltrimethoxysilane, methyltriethoxysilane, dimethyldimethoxysilane, phenyltriethoxysilane and/or hexadecyltrimethoxysilane, alone or in mixtures with one another.

12. Composition according to at least one of Claims 1 to 11, **characterized in that** further additives selected from the group of the diluents, reactive diluents, solvents, organic and inorganic fillers, emulsifiers, foaming aids and foam stabilizers, rheological additives, water scavengers, thioxotropic agents, flame retardants, defoamers, deaerators, film-forming polymers, antimicrobial and preservative substances, antioxidants, dyes, colorants and pigments, antifreezes, fungicides, adhesion promoters and/or reactive diluents, and plasticizers and complexing agents, spraying aids, wetting agents, vitamins, growth substances, hormones, fragrances, light stabilizers, free-radical scavengers, UV absorbers and further stabilizers and/or catalysts are used.

13. Use of the compositions according to at least one of Claims 1 to 12 in adhesives and/or sealants.

14. Use of the compositions according to at least one of Claims 1 to 12 in curable mixtures and solutions thereof and/or as an aqueous emulsion, as base materials for the production of adhesives, for surface coating and modification, as reactive crosslinkers, as adhesion promoters, spreaders and/or primers, and binders or sealants for various substrates such as metals, glass and glass fibers/glass fabric, wood, woodbase materials, natural fibers, and/or cork or silicatic materials, and for production of particles.

15. Adhesive or sealant comprising the compositions according to at least one of Claims 1 to 12.

16. Foamable adhesive or sealant according to Claim 15, **characterized in that** a physical and/or chemically released blowing agent is also used.

17. Process for bonding surfaces using an adhesive and sealant according to Claim 16, **characterized in that** a foamable composition is foamed between the surfaces to be bonded to form a foam, or else the foam producible from the mixture is applied after the foaming to one of the surfaces to be bonded or between the surfaces to be bonded, and the foam is then flattened between the surfaces to be bonded.

## Revendications

1. Compositions polymérisables contenant des composés hydroxyles porteurs de groupes silyles selon la formule 1 : 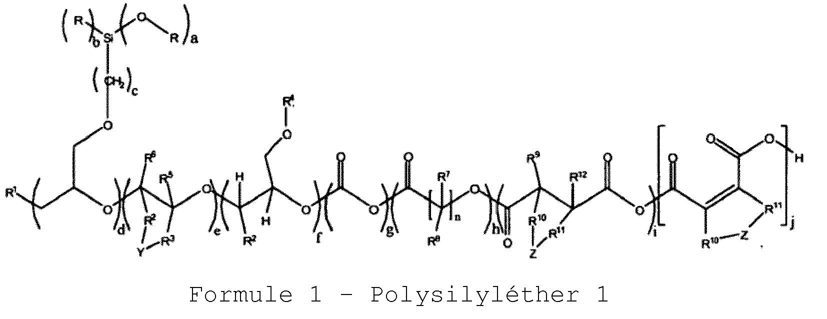 où
a est un entier entre 1 et 3
b est un entier entre 0 et 2
et la somme de a et b est égale à 3,
c est un entier entre 0 et 22
d est un entier entre 1 et 1 000
e est un entier entre 0 et 10 000
f est un entier entre 0 et 1 000
g est un entier entre 0 et 1 000
h, i et j sont des entiers entre 0 et 500
n est un entier entre 2 et 8
et avec la condition que les fragments de d à j soient librement permutables les uns avec les autres, c'est-à-dire qu'on puisse les échanger les uns avec les autres dans la séquence de la chaîne polyéther
et
R représente un ou plusieurs résidus identiques ou différents choisis parmi des résidus alkyles linéaires ou ramifiés, saturés, une fois ou plusieurs fois insaturés de 1 à 20 atomes de carbone ou groupes halogénoalkyles avec de 1 à 20 atomes de carbone, de même R¹ est également un résidu saturé ou insaturé, éventuellement ramifié, qui est lié par un atome d'oxygène, ou un résidu polyéther du type d'un groupe alcoxy, arylalcoxy ou alkylarylalcoxy, où la chaîne hydrocarbure peut être interrompue par des atomes d'oxygène, ou un résidu polyéther-alcoxy ou groupe aryloxy éventuellement aromatique monocyclique ou polycyclique,
R² ou R³, ainsi que R⁵ ou R⁶ sont identiquement ou également indépendamment les uns des autres H ou un résidu hydrocarbure insaturé ou une ou plusieurs fois insaturé, en outre également substitué une ou plusieurs fois, avec pour les résidus R⁵ et R⁶ le fait qu'ils sont identiquement un résidu hydrocarbure monovalent et que le résidu hydrocarbure peut être ponté de façon cycloaliphatique avec le fragment Y ; Y peut être absent, mais il peut aussi être un pont méthyle avec 1 ou 2 unités méthyles ; si Y est absent, alors R² et R³, indépendamment l'un de l'autre, sont de même un résidu linéaire ou ramifié avec de 1 à 20 atomes de carbone,
R⁴ correspond à un résidu alkyle linéaire ou ramifié de 1 à 24 atomes de carbone ou à un résidu aromatique ou cycloaliphatique pouvant éventuellement porter des groupes alkyles de son côté,
R⁷ et R⁸ sont, indépendamment l'un de l'autre, soit des groupes hydrogène, alkyle, alcoxy, aryle ou arylalkyle, qui peuvent être copolymérisés par polymérisation par ouverture de cycle avec des polyétheresters polymérisables contenant des groupes alcoxysilanes,
R⁹, R¹⁰, R¹¹ et R¹² sont, indépendamment les uns des autres, des groupes hydrogène, alkyle, alcényle, alcoxy, aryle ou arylalkyle, le résidu hydrocarbure pouvant être ponté cycloaliphatiquement ou aromatiquement avec le fragment
Z, et Z pouvant représenter aussi bien un résidu alkylène divalent qu'un résidu alcénylène,
ainsi qu'au moins un autre composé silane différent de formule 1.

2. Composé selon la revendication 1, **caractérisé en ce qu'**on utilise, comme composé silane, un prépolymère alcoxysilyle-fonctionnel, un polyéther alcoxysilyl-terminal, un polyester, un polyétherester, un polyuréthane, un polysiloxane ou polyéthersiloxane présentant des groupes alcoxysilyles, ou leurs mélanges.

3. Composition selon la revendication 1 ou 2, **caractérisée en ce que** le composé silane est un polymère modifié silane de formule 2 : 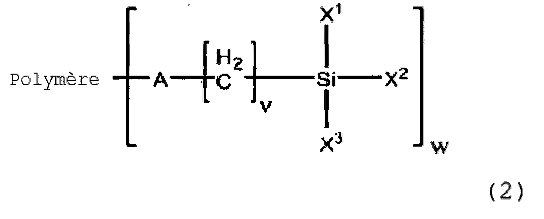 où
X¹, X² et X³ sont, indépendamment les uns des autres, des résidus alkyles ou alcoxy à entre 1 et 8 atomes de carbone,
A représente un résidu contenant un groupe carboxy, carbamate, amide, carbonate, uréido ou sulfonate ou représente un atome d'oxygène,
w est un entier entre 1 et 8, et
v est un entier entre 1 et 20, et
"Polymère" est un résidu polymère choisi dans un groupe constitué de résines alkydes, de résines alkydes modifiées par huiles, de polyester saturés ou insaturés, d'huiles naturelles, d'époxydes, de polyamides, de polycarbonates, de polyéthylènes, de polypropylènes, de polybutylènes, de polystyrènes, de copolymères éthylène-propylène, de (méth)acrylates, de (méth)acrylamides, et de leurs sels, de résines phénoliques, d'homopolymères et copolymères de polyoxydes de méthylène, de polyuréthanes, de polysulfones, de caoutchoucs sulfures, de nitrocelluloses, de butyrates de vinyle, de polymères de vinyle, d'éthylcelluloses, d'acétates de cellulose et/ou butyrates de cellulose, de rayonne, de gomme-laque, de cires, de copolymères d'éthylène, de caoutchoucs organiques, de polysiloxanes, de polyéthersiloxanes, de résines silicones, de polyéthers, de polyétheresters et/ou de polyéthercarbonates.

4. Composition selon la revendication 3, **caractérisée en ce qu'**on utilise comme prépolymère alcoxysilyle-fonctionnel de formule (2) des polymères α-silane terminaux, dont les groupes alcoxysilyles terminaux ne sont séparés d'un groupe A lié au polymère contenant de l'azote que par une unité méthyle, v = 1.

5. Composition selon au moins une des revendications 1 à 4, **caractérisée en ce que** le polyéther de silyle 1 est mélangé à des polyéthers diméthoxy(méthyl)silyl-méthylcarbamate- et/ou triméthoxysilyl-méthylcarbamate-terminaux.

6. Composition selon au moins une des revendications 1 à 3, **caractérisée en ce que** le polyéther de silyle 1 est utilisé en association avec des polymères silanes de formule (2), où les groupes silanes sont liés de façon terminale par une unité propylène, v = 3, à un squelette polymère, et où le groupe de liaison A est un groupe uréthane ou représente un résidu porteur de groupes urée.

7. Composition selon la revendication 6, **caractérisée en ce que**, comme polymères silanes de formule (2), on utilise un polyéther diméthoxy(méthyl)silyl-propylcarbamate- et/ou triméthoxy(méthyl)silyl-propylcarbamate-terminal.

8. Composition selon la revendication 3, **caractérisée en ce qu'**on utilise le polyéther de silyle 1 associé à des polymères silanes de formule (2), où sont utilisés des polyéthers silyl-terminaux sans uréthane ni urée avec A représentant un oxygène.

9. Composition selon la revendication 1, **caractérisée en ce qu'**on utilise le polyéther de silyle 1 associé à des silanes monomères de formule (2a) :
WₓSiV₍₄₋ₓ₎ (2a)
où
W représente des groupes non-hydrolysables identiques ou différents,
V représente des groupes hydroxy ou des groupes hydrolysables identiques ou différents, et
X = 1, 2, 3 ou 4
et les groupes hydrolysables V sont choisis dans le groupe comprenant des groupes hydrogène, halogène, alcoxy, aryloxy, acyloxy, acyle, amino, monoalkylamino et/ou dialkylamino, alors que le groupe non-hydrolysable W est choisi dans le groupe comprenant les résidus alkyle, alcényle, alcinyle, aryle, alkylaryle ou arylalkyle, la chaîne alkyle présentant de 0 à 50 atomes de carbone et pouvant aussi être interrompue par des hétéroatomes, comme l'oxygène, l'azote ou le soufre, ou pouvant être un résidu silicone, le résidu aryle pouvant aussi être hétéroaromatique, et les résidus W et V étant, en outre, substitués par un ou plusieurs substituants.

10. Composition selon la revendication 9, **caractérisée en ce que** le résidu non-hydrolysable W de formule (2a) des groupes fonctionnels est choisi parmi des groupes contenant des résidus glycidyle ou glycidyloxyalkyle, β-glycidyloxyéthyle, γ-glycidyloxypropyle, δ-glycidyloxypropyle, ε-glycidyloxypentyle, ω-glycidyloxyhexyle ou 2-(3,4-époxy-cyclohexyl)éthyle, méthacryloxyalkylène et acryloxyalkylène, méthacryloxyméthyle, acryloxyméthyle, méthacryloxyéthyle, acryloxyéthyle, méthacryloxypropyle, acryloxypropyle, méthacryloxybutyle, acryloxybutyle et/ou 3-isocyanatopropyle.

11. Composition selon la revendication 9 ou 10, **caractérisée en ce qu'**on utilise comme monomère silane N-cyclohexylaminométhyltriméthoxysilane, N-cyclohexyl-3-aminopropyltriéthoxysilane, 3-aminopropyltriméthoxysilane, vinyltriméthoxysilane, vinyltriéthoxysilane, vinyldiméthoxyméthylsilane, 3-isocyanatopropyltriméthoxysilane, 3-glycidyloxypropyltriméthoxysilane, 3-glycidyloxypropyltriéthoxysilane, 3-méthacryloxypropyltriméthoxysilane, méthyltriméthoxysilane, méthyltriéthoxysilane, diméthyldiméthoxysilane, phényltriéthoxysilane et/ou hexadécyltriméthoxysilane, seul ou en mélange les uns avec les autres.

12. Composition selon au moins une des revendications 1 à 11, **caractérisée en ce qu'**on utilise d'autres additifs dans le groupe des diluants, diluants réactifs, solvants, charges organiques et minérales, émulsifiants, agents moussants et stabilisateurs de mousses, additifs rhéologiques, déshydratants, agents de thixotropie, retardants, agents antimousses, agents désaérants, polymères filmogènes, agents antimicrobiens et conservateurs, antioxydants, colorants et pigments, antigels, fongicides, agents d'accrochage et/ou diluants réactifs, ainsi que plastifiants et complexants, additifs de pulvérisation, agents mouillants, vitamines, substances de croissance, hormones, parfums, agents de protection contre la lumière, anti-radicaux libres, absorbeurs d'UV, ainsi que d'autres stabilisants et/ou catalyseurs.

13. Utilisation des compositions selon au moins une des revendications 1 à 12 dans des colles et/ou des mastics.

14. Utilisation des compositions selon au moins une des revendications 1 à 12 dans des mélanges réticulables et leurs solutions et/ou comme émulsion aqueuse, comme matières premières pour la fabrication de colles, pour le recouvrement et la modification de surfaces, comme agents mouillants réactifs, comme agents d'accrochage, agents lissants et/ou apprêts ainsi que comme liants ou mastics pour différents substrats, comme des métaux, du verre et des fibres/tissus de verre, du bois, des dérivés du bois, fibres naturelles et/ou liège ou substances siliceuses, et pour la fabrication de particules.

15. Colles ou mastics contenant la composition selon au moins une des revendications 1 à 12.

16. Colle ou mastic moussant selon la revendication 15, **caractérisé en ce qu'**on l'utilise avec un agent moussant à libération physique et/ou chimique.

17. Procédé de collage de surfaces en utilisant une colle et un mastic selon la revendication 16, **caractérisé en ce qu'**on fait mousser une composition moussante entre les surfaces à coller, ou **en ce qu'**on applique la mousse issue du mélange après l'avoir fait mousser sur une des surfaces à coller ou entre les surfaces à coller, puis on pressure la mousse entre les surfaces à coller.
